(19)

**Europäisches Patentamt**
**European Patent Office**
**Office européen des brevets**

(11) **EP 4 575 931 B1**

(12) **EUROPEAN PATENT SPECIFICATION**

(45) Date of publication and mention
of the grant of the patent:
**04.02.2026 Bulletin 2026/06**

(21) Application number: **24220864.3**

(22) Date of filing: **18.12.2024**

(51) International Patent Classification (IPC):
**G06N 10/60** (2022.01)

(52) Cooperative Patent Classification (CPC):
**G06N 10/60**

(54) **IMPLEMENTATION OF HYBRID DENSITY FUNCTIONAL THEORY ON QUANTUM PROCESSORS WITH MOLLER-PLESSET PERTURBATION FOR CHEMICAL-COMPOUND SIMULATION**

IMPLEMENTIERUNG EINER HYBRIDDICHTEFUNKTIONALTHEORIE AUF QUANTENPROZESSOREN MIT MOLLER-PLESSET-STÖRUNG ZUR SIMULATION EINER CHEMISCHEN VERBINDUNG

MISE EN OEUVRE D'UNE THÉORIE FONCTIONNELLE DE DENSITÉ HYBRIDE SUR DES PROCESSEURS QUANTIQUES AVEC PERTURBATION DE MOLLER-PLESSET POUR SIMULATION DE COMPOSÉ CHIMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2023 IN 202321087618**

(43) Date of publication of application:
**25.06.2025 Bulletin 2025/26**

(73) Proprietor: **Tata Consultancy Services Limited Maharashtra (IN)**

(72) Inventors:
• **MUKHERJEE, ANIRBAN**
400096 Mumbai, Maharashtra (IN)
• **GOPAL, ANANTHAKRISHNA**
400096 Mumbai, Maharashtra (IN)
• **BANERJEE, RITAM**
400096 Mumbai, Maharashtra (IN)

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **ROSSMANNEK MAX ET AL: "Quantum HF/DFT-embedding algorithms for electronic structure calculations: Scaling up to complex molecular systems", THE JOURNAL OF CHEMICAL PHYSICS, vol. 154, no. 11, 3 September 2020 (2020-09-03), pages 1 - 16, XP093267641, ISSN: 0021-9606, DOI: 10.1063/5.0029536**
• **KO TAEHEE ET AL: "Implementation of the Density-functional Theory on Quantum Computers with Linear Scaling with respect to the Number of Atoms", ARXIV.ORG, 13 July 2023 (2023-07-13), pages 1 - 29, XP093268459, Retrieved from the Internet <URL:https://arxiv.org/abs/2307.07067> [retrieved on 20250422]**
• **ROBERT SCHADE ET AL: "Parallel Quantum Chemistry on Noisy Intermediate-Scale Quantum Computers", ARXIV.ORG, CORNELL UNIVERSITY LIBRARY, 201 OLIN LIBRARY CORNELL UNIVERSITY ITHACA, NY 14853, 11 August 2022 (2022-08-11), XP091292209**
• **ROSSMANNEK MAX ET AL: "Quantum Embedding Method for the Simulation of Strongly Correlated Systems on Quantum Computers", JOURNAL OF PHYSICAL CHEMISTRY LETTERS, vol. 14, no. 14, 6 February 2023 (2023-02-06), US, pages 1 - 8, XP093267643, ISSN: 1948-7185, DOI: 10.1021/acs.jpclett.3c00330**

EP 4 575 931 B1

**(Cont. next page)**

- SAMBIT DAS ET AL: "DFT-FE 1.0: A massively parallel hybrid CPU-GPU density functional theory code using finite-element discretization", ARXIV.ORG, CORNELL UNIVERSITY LIBRARY, 201 OLIN LIBRARY CORNELL UNIVERSITY ITHACA, NY 14853, 15 March 2022 (2022-03-15), XP091190622

- RYAN PEDERSON ET AL: "Large scale quantum chemistry with Tensor Processing Units", ARXIV.ORG, CORNELL UNIVERSITY LIBRARY, 201 OLIN LIBRARY CORNELL UNIVERSITY ITHACA, NY 14853, 13 December 2022 (2022-12-13), XP091392282, DOI: 10.1021/ACS.JCTC.2C00876

**Description**

TECHNICAL FIELD

The disclosure herein generally relates to quantum processors, and, more particularly, to Implementation of hybrid Density Functional Theory on quantum processors with Moller-Plesset Perturbation for chemical-compound simulation.

BACKGROUND

Quantum computers promises to solve industry-critical problems which are otherwise unsolvable or only very inefficiently addressable using classical computers. Key application areas include chemistry and materials, bioscience and bioinformatics, logistics, and finance. Interest in quantum computing has recently surged, in part due to a wave of advances in the performance of ready-to-use quantum computers. However, quantum computing platforms available have imposed significant constraints on simulations due to both the limited number of qubits available for the calculations as well as the relatively short qubit coherence times and modest gate fidelity. Therefore, a useful quantum computing application must be able to demonstrate superiority (i.e., quantum supremacy) over a classical simulation using relatively few qubits with a short depth.

Indeed, the applications of quantum algorithms for quantum chemistry remain limited in terms of size of affordable systems, as the size of the system dictates the number of required qubits. Even though the number of qubits on quantum devices is expected to increase rapidly, stable machines able to tackle real quantum chemistry systems are not expected in the next few years. In the near future, material and drug design may be aided by quantum computer assisted simulations. These have the potential to target chemical systems intractable by the most powerful classical computers. The enhancement of the compute power addresses a wide range of business problems related to discovery of novel materials in material sciences industry and novel drug molecules in pharma industry. It also addresses the modifications and robustness of thermodynamic properties of chemical systems i.e., novel materials or drugs as a functional of physical parameters like temperature, pressure, impurities, pH etc.

Existing quantum computing strategies include selecting a particular quantum algorithm and implementing it on a near term quantum device. Benchmarks of this character include using tensor networks, quantum communication protocols, and using a number of simple quantum circuits to benchmark the device. However, the resources offered by contemporary quantum computers are still limited, restricting the simulations to very simple molecules. In order to rapidly scale up to more interesting molecular systems.

Existing techniques cater to the limitations of near-term quantum device such as variational quantum eigensolver (VQE), quantum approximate optimization algorithm (QAOA) and variants, variational quantum linear systems solver, other quantum algorithms leveraging the variational principles, and quantum machine learning algorithms. In spite of such algorithmic innovations, many of these approaches have appeared to be impractical for commercially-relevant problems owing to their high cost in terms of number of measurements and runtime. Also, there is no such scalable technique to correct errors during Hybrid Density Functional Theory (DFT) computation with tensors.

In the conventional Kohn-sham DFT as stated above, the computational complexity scales cubically to the system size which is the consequence of the delocalized nature of the wave functions which are the eigen solutions of the Kohn Sham single particle Hamiltonian. To scale the Hybrid DFT calculations to large systems, there have been attempts to develop an algorithm which scales linearly with system size. One such code is ONETEP (order-N electronic total energy package) linear-scaling DFT calculations with large basis set (plane-wave) accuracy on parallel computers. It uses a basis of non-orthogonal generalized Wannier functions (NGWFs) expressed in terms of periodic cardinal sine (psinc) functions, which are in turn equivalent to a basis of plane-waves. ONETEP therefore is a combination of the benefits of linear scaling with a level of accuracy and variational bounds comparable to that of traditional cubic-scaling plane-wave approaches. During the calculation, the density matrix and the NGWFs are optimized with localization constraints. ONETEP optimizes the total energy of the system, ensuring self-consistent convergence of electronic structure.

Currently the efforts are towards speeding up the hybrid DFT calculations using Extra scale computing: CPU, GPU, MPI, Multiprocessing etc. However, all of these have memory and processing limitations. As quantum hardware and algorithms continue to develop, various industry sectors, particularly the pharmaceutical and material design domains, are applying quantum computation paradigm to their specific problems. There have been attempts made to implement DFT on a combination of classical and quantum processors, for example, US20220012382A1 which implements DFT on a classical processor and optimizes the DFT results on a quantum processor. However, the complex calculations are still performed on a classical processor which does not overcome the above mentioned bottlenecks in DFT calculations.

Rossmannek Max et al: "Quantum HF/DFT-Embedding Algorithms for Electronic Structure Calculations: Scaling up to Complex Molecular Systems" discloses that in the near future, material and drug design may be aided by quantum computer assisted simulations. These have the potential to target chemical systems intractable by the most powerful classical computers. However, the resources offered by contemporary quantum computers are still limited, restricting the chemical simulations to very simple molecules. In order to rapidly scale up to more interesting molecular systems, we propose the embedding of the quantum electronic structure calculation into a classically computed environment obtained at the Hartree-Fock (HF) or Density Functional Theory (DFT) level of theory. We achieve this by constructing an effective Hamiltonian that incorporates a mean field potential describing the action of the inactive electrons on a selected Active Space (AS). The ground state of the AS Hamiltonian is determined by means of the Variational Quantum Eigensolver (VQE) algorithm. With the proposed iterative DFT embedding scheme we are able to obtain energy correction terms for a single pyridine molecule that outperform the Complete Active Space Self-Consistent Field (CASSCF) results regardless of the chosen AS (Abstract).

Ko Taehee et al: "Implementation of the Density-functional Theory on Quantum Computers with Linear Scaling with respect to the Number of Atoms" discloses Density-functional theory (DFT) has revolutionized computer simulations in chemistry and material science. A faithful implementation of the theory requires self-consistent calculations. However, this effort involves repeatedly diagonalizing the Hamiltonian, for which a classical algorithm typically requires a computational complexity that scales cubically with respect to the number of electrons. This limits DFT's applicability to large-scale problems with complex chemical environments and microstructures. This article presents a quantum algorithm that has a linear scaling with respect to the number of atoms, which is much smaller than the number of electrons. Our algorithm leverages the quantum singular value transformation (QSVT) to generate a quantum circuit to encode the density-matrix, and an estimation method for computing the output electron density. In addition, we present a randomized block coordinate fixed-point method to accelerate the self-consistent field calculations by reducing the number of components of the electron density that needs to be estimated. The proposed framework is accompanied by a rigorous error analysis that quantifies the function approximation error, the statistical fluctuation, and the iteration complexity. In particular, the analysis of our self-consistent iterations takes into account the measurement noise from the quantum circuit. These advancements offer a promising avenue for tackling large-scale DFT problems, enabling simulations of complex systems that were previously computationally infeasible (Abstract).

Robert Schade et al: "Parallel Quantum Chemistry on Noisy Intermediate-Scale Quantum Computers" teaches a novel parallel hybrid quantum-classical algorithm for the solution of the quantum-chemical ground-state energy problem on gate-based quantum computers is presented. This approach is based on the reduced density-matrix functional theory (RDMFT) formulation of the electronic structure problem. For that purpose, the density-matrix functional of the full system is decomposed into an indirectly coupled sum of density-matrix functionals for all its subsystems using the adaptive cluster approximation to RDMFT. The approximations involved in the decomposition and the adaptive cluster approximation itself can be systematically converged to the exact result. The solutions for the density-matrix functionals of the effective subsystems involves a constrained minimization over many-particle states that are approximated by parametrized trial states on the quantum computer similarly to the variational quantum eigensolver. The independence of the density-matrix functionals of the effective subsystems introduces a new level of parallelization and allows for the computational treatment of much larger molecules on a quantum computer with a given qubit count. In addition, for the proposed algorithm techniques are presented to reduce the qubit count, the number of quantum programs, as well as its depth. The evaluation of a density-matrix functional as the essential part of our new approach is demonstrated for Hubbard-like systems on IBM quantum computers based on superconducting transmon qubits (Abstract).

Rossmannek Max et al: "Quantum Embedding Method for the Simulation of Strongly Correlated Systems on Quantum Computers" disclose Quantum computing has emerged as a promising platform for simulating strongly correlated systems in chemistry, for which the standard quantum chemistry methods are either qualitatively inaccurate or too expensive. However, due to the hardware limitations of the available noisy near-term quantum devices, their application is currently limited only to small chemical systems. One way for extending the range of applicability can be achieved within the quantum embedding approach. Herein, we employ the projection-based embedding method for combining the variational quantum eigensolver (VQE) algorithm, although not limited to, with density functional theory (DFT). The developed VQE-in-DFT method is then implemented efficiently on a real quantum device and employed for simulating the triple bond breaking process in butyronitrile. The results presented herein show that the developed method is a promising approach for simulating systems with a strongly correlated fragment on a quantum computer. The developments as well as the accompanying implementation will benefit many different chemical areas including the computer aided drug design as well as the study of metalloenzymes with a strongly correlated fragment (Abstract).

Sambit Das et al: "DFT-FE 1.0: A massively parallel hybrid CPU-GPU density functional theory code using finite-element discretization" presents DFT-FE 1.0, building on DFT-FE 0.6 [Comput. Phys. Commun. 246, 106853 (2020)], to conduct fast and accurate large-scale density functional theory (DFT) calculations (reaching ~ 100,000 electrons) on both many-core CPU and hybrid CPU-GPU computing architectures. This work involves improvements in the real-space formulation-via an improved treatment of the electrostatic interactions that substantially enhances the computational efficiency-as well high performance computing aspects, including the GPU acceleration of all the key compute kernels in DFT-FE. We demonstrate the accuracy by comparing the ground-state energies, ionic forces and cell stresses on a wide-range of benchmark systems against those obtained from widely used DFT codes. Further, we demonstrate the numerical efficiency of our implementation, which yields ~ 20x CPU-GPU speed-up by using GPU acceleration on hybrid CPU-GPU nodes. Notably, owing to the parallel-scaling of the GPU implementation, we obtain wall-times of 80- 140 seconds for full groundstate calculations, with stringent accuracy, on benchmark systems containing ~ 6,000 - 15,000 electrons (Abstract).

Ryan Pederson et al: "Large scale quantum chemistry with tensor processing units" disclose the use of Google's cloud-based Tensor Processing Units (TPUs) to accelerate and scale up conventional (cubic-scaling) density functional theory (DFT) calculations. Utilizing 512 TPU cores, we accomplish the largest such DFT computation to date, with 247848 orbitals, corresponding to a cluster of 10327 water molecules with 103270 electrons, all treated explicitly. Our work thus paves the way towards accessible and systematic use of conventional DFT, free of any system-specific constraints, at unprecedented scales (Abstract).

SUMMARY

Embodiments of the present disclosure present technological improvements as solutions to one or more of the above-mentioned technical problems recognized by the inventors in conventional systems. In one embodiment, a system for implementation of hybrid Density Functional Theory on quantum processors with Moller-Plesset Perturbation for chemical-compound simulation is provided. The invention is set out in the appended set of claims 5-8.

In another aspect, a method implementation of hybrid Density Functional Theory on quantum processors with Moller-Plesset Perturbation for chemical-compound simulation is provided. The invention is set out in the appended set of claims 1-4.

In yet another aspect, a non-transitory computer readable medium for implementation of hybrid Density Functional Theory on quantum processors with Moller-Plesset Perturbation for chemical-compound simulation is provided. The invention is set out in the appended set of claims 9-12.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 is a functional block diagram of a system (alternatively referred as Hybrid-Quantum classical system) for implementation of hybrid Density Functional Theory on quantum processors with Moller-Plesset Perturbation (MP2) corrected for chemical-compound simulation, in accordance with some embodiments of the present disclosure.

FIG.2A, FIG.2B and FIG.2C (collectively referred as FIG.2) is an exemplary flowchart of a method performed by the quantum computer of FIG.1 implementing Hybrid Density Functional Theory (DFT) on quantum processors with Moller-Plesset Perturbation (MP2) corrected for chemical-compound simulation, in accordance with some embodiments of the present disclosure.

FIG.3 illustrates a quantum circuit used to compute Hybrid (K) matrix in the method illustrated in FIG.2, in accordance with some embodiments of the present disclosure.

FIG.4 illustrates a quantum circuit used to compute correlation exchange potential (Vxc) in the method illustrated in FIG.2, in accordance with some embodiments of the present disclosure.

FIG.5 illustrates a quantum circuit performing Moller-Plesser Perturbations (MP2) energy corrections in the method illustrated in FIG.2, in accordance with some embodiments of the present disclosure.

FIG.6 illustrates a quantum circuit implementing Hybrid Density Functional Theory (DFT) on quantum processors with Moller-Plesset Perturbation (MP2) corrected for chemical-compound simulation in the method illustrated in FIG.2, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Most industrially relevant chemical systems in the material sciences industry are bulk materials. One supercell made from a collection of neighboring unit cells involves around thousands of atoms which corresponds to several thousands of electronic orbitals even in the least correlated basis. Currently these chemical systems are treated within the Quantum Mechanical (QM) or Molecular Mechanical (MM) approach, where only a subsystem with strong quantum correlations is simulated using DFT and the rest is treated only via the MM technique. Identifying these subsystems requires doing prior MM and/or force field analysis that adds to additional overhead cost. The gap in applying this DFT technology to the complete system arises from the quartic and cubic scaling wall bottleneck i.e., for a 50000 electronic orbital system (corresponding to a supercell of the bulk material), computing even one KS-DFT step would require 0.001 secs on the FUGAKU- the world's second most powerful supercomputer with a Rmax of 442 PETA Flops. For all practical purposes, the DFT code should converge within 100 self-consistency steps therefore to simulate one large supercell on FUGAKU would require 0.1 seconds. For real world simulations of chemical compounds, one would require screening across several lakhs of molecular configurations in a supercell and that would require more than one day. The output electronic density computed from DFT needs to be in turn passed into Force-Field or MM modelling suites that then recomputes the geometric positioning of atoms and the DFT energies needs to be recomputed. Hence, for a bit larger system such calculations can enter several days of calculations even on the largest of the supercomputers. Similarly, the chemical systems in the Pharma industry that correspond to Protein-drug or Protein-Protein systems involve more than thousands of atoms which corresponds to a several thousands of electronic orbitals. These chemical systems are treated approximately within the QM or MM approach, only a subsystem is treated with strong quantum correlations and is simulated using DFT and the rest is treated only via the MM technique. Even the drug molecules in the pharma industry have more than 500 molecular weight, therefore screening across different drug molecules enters across several days of efforts.

DFT and Hybrid DFT although being a mature technology has a tremendous bottleneck. If an algorithm can reduce the time computational complexity of DFT for general chemical systems even nominally from cubic to quadratic or linear then several days of calculations can be reduced to a few days or within a day. This will enable faster and or more screening, handling larger QM regions and reduce the product discovery time drastically.

The present disclosure provides a method for implementing hybrid Density Functional Theory on quantum processors with Moller-Plesset Perturbation (MP2) for chemical-compound simulation. The system may be alternatively referred as Hybrid-Quantum classical system 100. Hybrid DFT is an extension of DFT which is an iterative method where calculations on classical platform are interweaved with calculations on quantum processors. Here, the diagonalization problem is mapped to a sequence of quadratic least squares problem using a Quantum linear systems. DFT provides an exact treatment of many-body quantum ground state given the exact exchange-correlation energy functional theory. The advantage of DFT on classical platforms is that only a small set of electron densities and non-interacting wavefunctions need to be stored and manipulated and can be stored efficiently.

Hybrid DFT is advantageous over other semi local DFT (LDA, GGA, meta GGA) because of 1. Reduction of self-interaction error due to addition of the exact exchange matrix (Hybrid (K) matrix contribution. It also provides betters band gaps, bond lengths, vibrational frequencies compared to semi-local DFT. Further, additional Moller-Plesset Perturbation (MP2) error wavefunction correction simulation adds the leading post-Hybrid DFT that betters the prediction of polarization, dipole moment and other physical properties important to assess the applicability of the chemical compound in different use-cases.

Kohn-Sham (KS) hybrid Density Functional Theory (DFT) process is initiated from a set of $N_b$ basis functions $\mathbb{B} = \{\phi_\mu(r)\}_{\mu=1}^{N_b}$ to compute the core Hamiltonian $h$ which is a $N_b \times N_b$ matrix. $h$ constitutes the free particle energy of electrons and one-body nuclear potential arising from the electron-nucleus interactions, both these terms are independent of electronic density. Therefore $h$ needs to be computed while initiating the self-consistent field (SCF) procedure. The direct ($J$) matrix, exact-exchange ($K$) matrix are electronic density dependent terms and are computed from the Electronic Repulsion Integral (ERI) tensor. The correlation exchange potential or the correlation exchange matrix ($V^{xc}$) is computed from the electronic density, its gradient and/or the Kinetic energy density. Together $J$, $K$ and $V^{xc}$ make the hybrid Kohn-Sham Fock Matrix functional $F$ as given by Equation 1.

$$F[D] = h + J[D] - cK[D] + V^{xc}[D] \text{ ----- Equation 1}$$

In Equation 1, $D$ is the one-particle density matrix discretized in the basis of $\{\phi_\mu\}$ and $c \in \mathbb{R}^+$ is the modulation for the exact exchange term. The terms $J$, $K$ can be computed from the AO-integral approach using the ERI tensor $\langle ij|kl \rangle$ and $D$ as in Equations 2 and 3, respectively.

$$J_{ij} = \sum_{kl} \langle ij|kl \rangle D_{kl} \text{ ----- Equation 2}$$

$$K_{ij} = \sum_{kl} \langle ik|jl \rangle D_{kl} \text{ ----- Equation 3}$$

In Equations 2 and 3, the ERI tensor $\langle ij|kl \rangle$ is obtained by integrating the space of basis functions in $\mathbb{R}^3$ according to Equation 4,

$$\langle ij|kl \rangle = \int d^3\mathbf{r}\, d^3\mathbf{r}'\, \phi_i(\mathbf{r})\phi_j(\mathbf{r})\frac{1}{|\mathbf{r}-\mathbf{r}'|}\phi_k(\mathbf{r}')\phi_l(\mathbf{r}') \text{ ---- Equation 4}$$

The correlation-exchange potential $V^{xc}$ in the discretized basis $\{\phi_j\}$ is computed by Equation 5 where the basis functions are defined according to Equation 6,

$$V_{ij}^{xc} = \int_{R^3} d^3\mathbf{r}\, \phi_i(\mathbf{r})\frac{\delta E^{xc}[\rho(\mathbf{r})]}{\delta\rho(\mathrm{r})}\phi_j(\mathbf{r}) \text{ ---- Equation 5}$$

$$\phi_a(\mathbf{r}) = (x - A_x)^{a_x}\left(y - A_y\right)^{a_y}(z - A_z)^{a_z}\, e^{\left(-\vartheta(x-A_x)^2\right)}\, e^{\left(-\vartheta(z-A_z)^2\right)}$$

$$\text{---- Equation 6}$$

In Equation 6, $A_x, A_y, A_z$ are nuclear coordinate locations of the Gaussian functions, $a = (a_x, a_y, a_z)$ are the integer cartesian quanta and $\vartheta$ is the cartesian Gaussian exponent. In Equation 5, $E^{xc}$ is the exchange energy functional evaluated for the electronic density $r$ and its form depends on the DFT method being used. The ERI tensor is represented using the Cholesky decomposition representation as given by Equation 7,

$$\langle ij|kl \rangle = \sum_P L_{ij}^P L_{kl}^P \text{ ------ Equation 7}$$

The Cholesky matrices $L^P$ can be obtained from the Density-Fitting (DF) or the resolution of identity (RI) method as in Equation 8,

$$L_{ij}^P = \frac{1}{\sqrt{w_P}}\sum_Q u_{QP}\langle ij|Q\rangle \text{ ---- Equation 8}$$

In Equation 8, $\langle ij|Q\rangle$ are 3-center 2-electron integrals represented in terms of the auxiliary basis functions $\{\chi_P(r)\}_{P=1}^{Naux}$, and $u_{QP}, w_P$ are obtained from the spectral decomposition of 2-center 2-electron integrals $V_{PQ} = \sum_R u_{PR} w_R u_{QR}^*$ represented in the auxiliary basis. 3-center 2-electron integrals are given by Equation 9 and $V_{PQ} = \langle P|Q\rangle$ represents two center two electron integrals given by Equation 10.

$$\langle ij|P \rangle = \int d^3\mathbf{r}\, d^3\mathbf{r}'\, \frac{\phi_i(\mathbf{r})\phi_j(\mathbf{r})\Lambda_P(\mathbf{r}')}{|\mathbf{r}-\mathbf{r}'|} \text{ ..... Equation 9}$$

$$\langle P|Q \rangle = \int d^3\mathbf{r}\, \frac{\Lambda_P(\mathbf{r})\Lambda_Q(\mathbf{r})}{|\mathbf{r}-\mathbf{r}'|} \text{ ..... Equation 10}$$

The $J$ and $K$ matrix elements are computed using the RI approach as in Equation 11.

$$J_{ij} = \sum_P L_{ij}^P \sum_{kl} L_{kl}^P D_{kl},\, K_{ij} = \sum_{Pl} L_{il}^P \sum_k L_{jk}^P D_{kl} \text{ .... Equation 11}$$

When the KS-DFT is classically computed, the complexity of computing $J$ and $K$ is $O(pN^2)$ and this complexity resides in computing $K$. Computing $h$ and $V^{xc}$ has lower complexity of $O(N^2)$. Next step of DFT is to solve the generalized eigenvalue problem for the Fock matrix accounting for the overlap between basis functions $S_{ij} = \langle\phi_i|\phi_j\rangle$ and the density matrix $D^l$ of a current iteration as given by Equation 12.

$$F\left[D^{(l)}\right]C^{(l+1)} = SC^{(l+1)}\hat{E}^{(l+1)} \text{ ..... Equation 12}$$

In Equation 12, the one particle density matrix $D^{(l)} = C^{(l)}WC^{(l)\dagger}$, where the occupancy matrix $W_{ij} = \theta(\mu - E_i)\delta_{ij}$ fills up $N_e/2$ lowest energy levels below the chemical potential $\mu$.

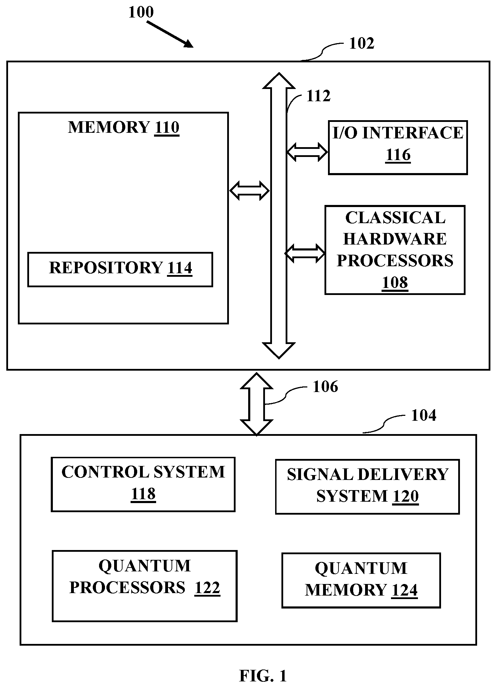

Referring now to the drawings, and more particularly to FIG.1 through FIG.6, where similar reference characters denote corresponding features consistently throughout the figures, there are shown preferred embodiments, and these embodiments are described in the context of the following exemplary system and/or method.

FIG.1 is a functional block diagram of a system (alternatively referred as Hybrid-Quantum classical system) for implementation of hybrid Density Functional Theory on quantum processors with Moller-Plesset Perturbation (MP2) corrected for chemical-compound simulation, in accordance with some embodiments of the present disclosure.

The Hybrid-Quantum classical system 100 includes a classical computing system 102, a quantum computing system 104 and a communication interface 106. The classical computing system 102 comprises classical hardware processors 108, at least one memory such as a memory 110, a I/O interface 116. The classical hardware processors 108, the memory 110, and the Input /Output (I/O) interface 116 may be coupled by a system bus such as a system bus 112 or a similar mechanism. In an embodiment, the classical hardware processors 108 can be one or more hardware processors. The classical hardware processors and the hardware processors is interchangeably used throughout the document. Similarly, the classical computing system is a normal computing system.

The I/O interface 116 may include a variety of software and hardware interfaces, for example, a web interface, a graphical user interface, and the like., for example, interfaces for peripheral device(s), such as a keyboard, a mouse, an external memory, a printer, and the like. Further, the I/O interface 116 may enable the system 100 to communicate with other devices, such as web servers, and external databases. The I/O interface 116 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 116 may include one or more ports for connecting several computing systems with one another or to another server computer.

The one or more hardware processors 108 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 108 is configured to fetch and execute computer-readable instructions stored in the memory 110.

The memory 110 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

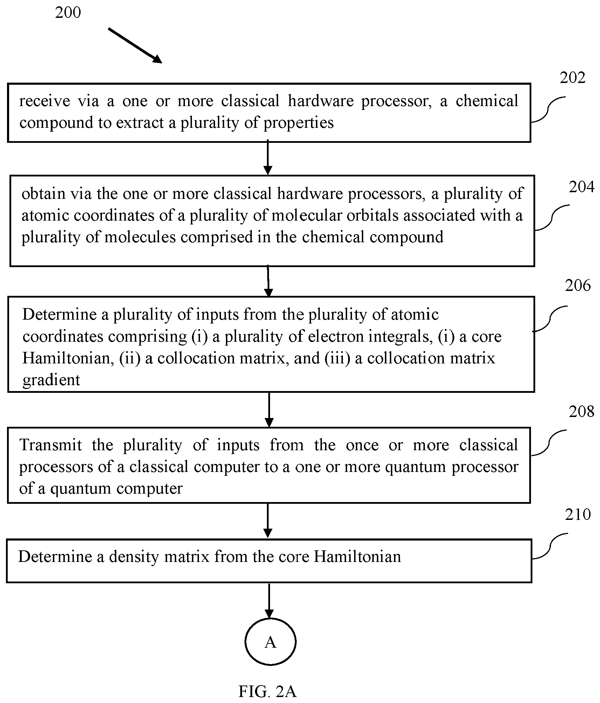

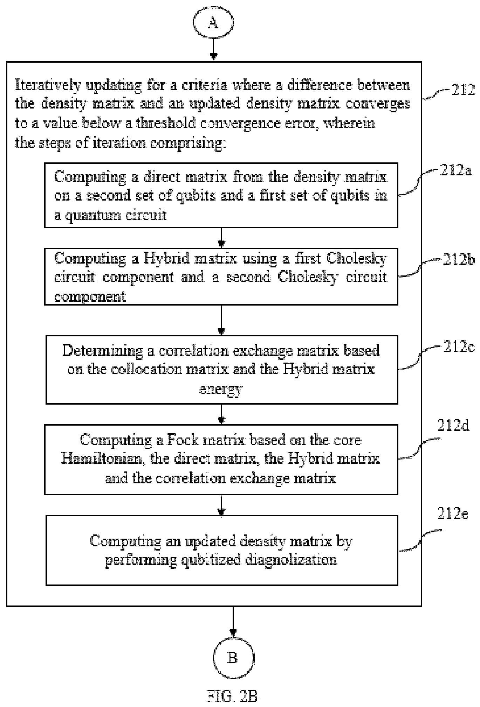

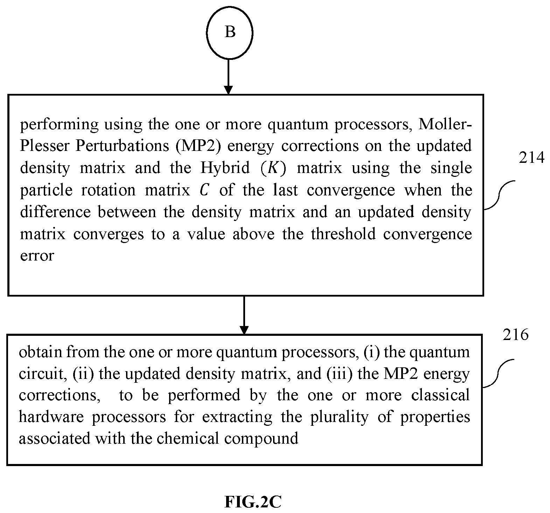

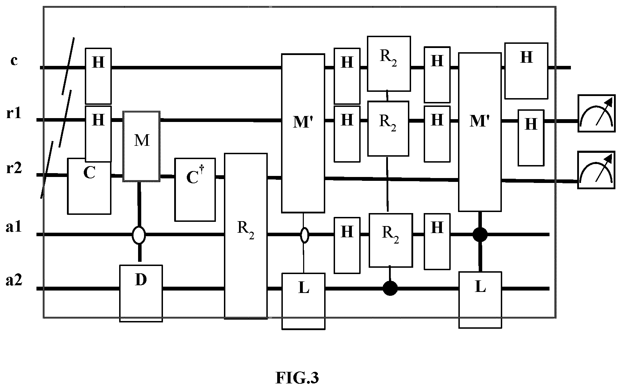

In an embodiment, the memory 110 includes a data repository 114. The data repository (or repository) 114 may include a plurality of abstracted piece of code for refinement and data that is processed, received, or generated as a result of the execution of the method illustrated in FIG.2 and FIG.3. Although the data repository 114 is shown internal to the system 100, it should be noted that, in alternate embodiments, the data repository 114 can also be implemented external to the system 100, where the data repository 114 may be stored within a database (repository 114) communicatively coupled to the system 100. The data contained within such external database may be periodically updated. For example, new data may be added into the database (not shown in FIG.1) and/or existing data may be modified and/or non-useful data may be deleted from the database. In one example, the data may be stored in an external system, such as a Lightweight Directory Access Protocol (LDAP) directory and a Relational Database Management System (RDBMS).

The example quantum computing system 104 shown in FIG.1 includes a control system 118, a signal delivery system 120, a one or more Quantum Processors 122 and a quantum memory 124. The quantum computing system 104 may include additional or different features, and the components of a quantum computing system may operate as described with respect to FIG.1 or in another manner.

The exemplified quantum computing system 104 shown in FIG.1 can perform quantum computational tasks (such as, for example, quantum simulations or other quantum computational tasks) by executing quantum algorithms. In some implementations, the quantum computing system 104 can perform quantum computation by storing and manipulating information within individual quantum states of a composite quantum system. For example, Qubits (i.e., Quantum bits) can be stored in and represented by an effective two-level sub-manifold of a quantum coherent physical system in the one or more Quantum Processors 122.

In an embodiment, the quantum computing system 104 can operate using gate-based models for quantum computing. For example, the Qubits can be initialized in an initial state, and a quantum logic circuit comprised of a series of quantum logic gates can be applied to transform the qubits and extract measurements representing the output of the quantum computation. The exemplified Quantum Processors 122 shown in FIG.1 may be implemented, for example, as a superconducting quantum integrated circuit that includes Qubit devices. The Qubit devices may be used to store and process quantum information, for example, by operating as ancilla Qubits, data Qubits or other types of Qubits in a quantum algorithm. Coupler devices in the superconducting quantum integrated circuit may be used to perform quantum logic operations on single qubits or conditional quantum logic operations on multiple qubits. In some instances, the conditional quantum logic can be performed in a manner that allows large-scale entanglement within the one or more Quantum Processors 122. Control signals may be delivered to the superconducting quantum integrated circuit, for example, to manipulate the quantum states of individual Qubits and the joint states of multiple Qubits. In some instances, information can be read from the superconducting quantum integrated circuit by measuring the quantum states of the qubit devices. The one or more Quantum Processors 122 may be implemented using another type of physical system.

The exemplified one or more Quantum Processors 122, and in some cases all or part of the signal delivery system 120, can be maintained in a controlled cryogenic environment. The environment can be provided, for example, by shielding equipment, cryogenic equipment, and other types of environmental control systems. In some examples, the components in the one or more Quantum Processors 122 operate in a cryogenic temperature regime and are subject to very low electromagnetic and thermal noise. For example, magnetic shielding can be used to shield the system components from stray magnetic fields, optical shielding can be used to shield the system components from optical noise, thermal shielding and cryogenic equipment can be used to maintain the system components at controlled temperature, etc.

In the example shown in FIG. 1, the signal delivery system 120 provides communication between the control system 118 and the one or more Quantum Processors 122. For example, the signal delivery system 120 can receive control signals from the control system 118 and deliver the control signals to the one or more Quantum Processors 122. In some instances, the signal delivery system 120 performs preprocessing, signal conditioning, or other operations to the control signals before delivering them to the Quantum Processors 122. In an embodiment, the signal delivery system 120 includes connectors or other hardware elements that transfer signals between the Quantum Processors 122 and the control system 118. For example, the connection hardware can include signal lines, signal processing hardware, filters, feedthrough devices (e.g., light-tight feedthroughs, etc.), and other types of components. In some implementations, the connection hardware can span multiple different temperature and noise regimes. For example, the connection hardware can include a series of temperature stages that decrease between a higher temperature regime (e.g., at the control system 118) and a lower temperature regime (e.g., at the Quantum Processors 122).

In the example quantum computer system 104 shown in FIG.1, the control system 118 controls operation of the Quantum Processors 122. The exemplified control system 118 may include data processors, signal generators, interface components and other types of systems or subsystems. Components of the example control system 118 may operate in a room temperature regime, an intermediate temperature regime, or both. For example, the control system 118 can be configured to operate at much higher temperatures and be subject to much higher levels of noise than are present in the environment of the Quantum Processors 122. In some embodiments, the control system 118 includes a classical computing system that executes software to compile instructions for the Quantum Processors 122. For example, the control system 118 may decompose a quantum logic circuit or quantum computing program into discrete control operations or sets of control operations that can be executed by the hardware in the Quantum Processors 122. In some embodiments the control system 118 applies a quantum logic circuit by generating signals that cause the Qubit devices and other devices in the Quantum Processors 122 to execute operations. For instance, the operations may correspond to single-Qubit gates, two-Qubit gates, Qubit measurements, etc. The control system 118 can generate control signals that are communicated to the Quantum Processors 122 by the signal delivery system 120, and the devices in the Quantum Processors 122 can execute the operations in response to the control signals.

In some other embodiments, the control system 118 includes one or more classical computers or classical computing components that produce a control sequence, for instance, based on a quantum computer program to be executed. For example, a classical processor may convert a quantum computer program to an instruction set for the native gate set or architecture of the Quantum Processors 122. In some cases, the control system 118 includes a microwave signal source (e.g., an arbitrary waveform generator), a bias signal source (e.g., a direct current source) and other components that generate control signals to be delivered to the Quantum Processors 122. The control signals may be generated based on a control sequence provided, for instance, by a classical processor in the control system 118. The example control system 118 may include conversion hardware that digitizes response signals received from the Quantum Processors 122. The digitized response signals may be provided, for example, to a classical processor in the control system 118.

In some embodiments, the quantum computer system 104 includes multiple quantum information processors that operate as respective quantum processors. In some cases, each Quantum Processors can operate independent of the others. For instance, the quantum computer system 104 may be configured to operate according to a distributed quantum computation model, or the quantum computer system 104 may utilize multiple Quantum Processors in another manner.

In some implementations, the quantum computer system 104 includes multiple control systems, and each Quantum Processors may be controlled by a dedicated control system. In some implementations, a single control system can control multiple Quantum Processors; for instance, the control system 118 may include multiple domains that each control a respective Quantum Processors. In some instances, the quantum computing system 104 uses multiple Quantum Processors to execute multiple unentangled quantum computations (e.g., multiple Variational Quantum Eigen solver (VQE)) that collectively simulate a single quantum mechanical system.

In an embodiment, the quantum memory 124 is a quantum-mechanical version of classical computer memory. The classical computer memory stores information such as binary states and the quantum memory 124 stores a quantum state for later retrieval. These states hold useful computational information known as Qubits. In an embodiment, the communication interface 106 which connects the classical computing system 102 and the quantum computing system 104 is a high speed digital interface.

FIG.2A, FIG.2B and FIG.2C (collectively referred as FIG. 2) is an exemplary flowchart of a method performed by the quantum computer of FIG.1 implementing Hybrid Density Functional Theory (DFT) on quantum processors with Moller-Plesset Perturbation (MP2) corrected for chemical-compound simulation, in accordance with some embodiments of the present disclosure.

In an embodiment, the system 100 includes one or more data storage devices or the memory 110 operatively coupled to the one or more hardware processor(s) 108 and is configured to store instructions for execution of steps of the method 200 by the one or more hardware processors 108. The steps of the method 200 of the present disclosure will now be explained with reference to the components or blocks of the system 100 as depicted in FIG.1, the steps of flow diagram as depicted in FIG.2 and the quantum circuit of FIG.3. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG.2, at step 202 of the method 200, one or more classical hardware processors are configured to receive a chemical compound to extract a plurality of properties.

The chemical compound may be at least one of a molecule or a solid. Molecule here refers to a general arrangement of atoms, and the solid here refers to a crystalline form that corresponds to a periodic arrangement of atoms. For example, when it comes to Pharma Industry the drug capsule for instance is a drug crystal, the atoms have a periodic arrangement. In the pharma industry, the chemical compound maybe a drug lead and its conformations whose physical properties must be analyzed to determine feasibility of synthesizing the drug from the drug lead. The plurality of properties of drug lead includes large HOMO-LUMO gap in solvent medium, acid-base dissociation constant (pKa) of a drug, lower dipole moment lesser than 10.

At step 204 of the method 200 the one or more classical hardware processors are configured to obtain a plurality of atomic coordinates of a plurality of molecular orbitals associated with a plurality of molecules comprised in the chemical compound.

At step 206 of the method 200, the one or more classical hardware processors are configured to determine a plurality of inputs from the plurality of atomic coordinates comprising (i) a plurality of electron integrals, (i) a core Hamiltonian, (ii) a collocation matrix, and (iii) a collocation matrix gradient. The plurality of electron integrals comprises a 3-center 2-electron integrals, 2-center 2-electron integrals, and 2-center 1-electron integrals.

Each electron integral describe the Coulomb repulsion integral that are computed in atomic orbital basis and can be represented in either spherical or cartesian coordinates. The electron integral describes the overlap between the basis states. The plurality of electron integrals are determined using tools such as LIBCINT, Python-based Simulations of Chemistry Framework (PySCF), NorthWest computational Chemistry (NWchem) etc. The collocation matrix is a rectangular matrix of dimensions ($Ng$, $Nao$), wherein $Ng$ represents a number of real space grid points, and $Nao$ is a number of basis functions. It comprises a plurality of basis functions of a plurality of atomic orbitals and a plurality of points on numerical grid. Each of the plurality of basis functions is a Gaussian wave function centered around the atomic coordinates.

Further, at step 208 of the method 200 are configured to transmit the plurality of inputs from the one or more classical hardware processors of a classical computer to a one or more quantum processor of a quantum computer.

The plurality of inputs determined from each molecular orbits are transmitted to the quantum processors of the quantum computer.

Now referring to the step 210 of the method 200, the one or more quantum processors determines a density matrix from the core Hamiltonian. One example way of diagonalizing the core Hamiltonian is described in Indian patent application number 202321061415.

Once the density matrix is determined at step 212 of the method 200, the one or more quantum processors iteratively perform for a criteria where a difference between the density matrix and an updated density matrix converges to a value below a threshold convergence error. The convergence criteria is said to be satisfied when norm of a difference between the updated density matrix at a current iteration and the density matrix at a previous iteration is below the threshold convergence error. The threshold convergence error may be for example $10^{-9}$. Steps 212a to 212e are performed at each iteration to update the density matrix. At step (212a), a direct density matrix (alternatively referred to as J matrix, Coulomb matrix etc.) is computed from the density matrix on a second set of qubits and a first set of qubits in a quantum circuit component of a quantum circuit. The quantum circuit comprises a (i) the first set of qubits, the second set of qubits, and a plurality of ancilla qubits. As a first component in the quantum circuit the density matrix is loaded. The quantum circuit component is defined for local density approximation given in Equation 13,

$$V_J = H^{\otimes m} V_L' R V_L H^{\otimes m} O(D) \text{ ----- Equation 13}$$

Referring now FIG.3, at step 212b a Hybrid matrix (alternatively referred as K matrix) is computed using (i) a first Cholesky tensor of shape (*Naux, NaoNao*) for a first Cholesky circuit component, (ii) a second Cholesky tensor of shape (*Nao, NauxNao*) for a second Cholesky circuit component and (iii) the density matrix encoded with the second set of qubits including one control qubit and one target qubit to store coefficients. Here, *Naux* is a number of auxillary vectors and *Nao* is a number of atomic orbitals. The quantum circuit is further loaded with the first Cholesky circuit component and the first Cholesky circuit component as inputs. In an embodiment, the quantum circuit is mathematically represented as: *log Naux* + 2*log Nao* + 2 qubits. The first set of qubits is referred as *log Naux* and the second set of qubits is referred as 2*log Nao*. Additional 2 qubits one among them is control and the other is ancillary qubit.

In one embodiment, the first Cholesky tensor of shape is given as (*Naux, NaoNao*). The second Cholesky tensor of shape is given as (*Nao, NauxNao*). The density matrix tensor shape is given as (*Nao, Nao*). The rectangular matrix tensor shape is given as (*NauxNao, Nao*).

Initially, the computed direct (J) matrix and the density matrix are loaded in the quantum circuit. The density matrix is loaded on the first set of 2*n* = 2 *logNao* qubits in the quantum circuit of *m* + 2*n* + 1 = *logNaux* + 2 *logNao* + 1 *qubits.* Where, *Nao* =Number of atomic orbitals, *Naux*=Numberof auxillary vectors in the Density fitting or Resolution of identity approach). The Density matrix is loaded using its Eigen decomposition representation that involves,

1. $\binom{Nao}{2}$ Given rotations on *logNao* qubits.

2. Then block encoding a diagonal matrix of 1's in the initial *Ne*/2 diagonal bocks and zeros in the rest using 2 *logNao* qubits.

3. Another set of $\binom{Nao}{2}$ Givens rotation with conjugate angles on *Ne*/2 diagonals. (This is a state-preparation oracle for the quantum circuit) as given in Equation 14,

$$V_D = I_2^{\otimes m} \otimes \Bigg[ (C \otimes I_2^{\otimes n}$$

$$\otimes I_2^{a_1}) \Bigg( \sum_k |k,k,0\rangle\langle k,k,0| \otimes (\theta(\mu - E_k)I_{a_1} + (1 - \theta(\mu$$

$$- E_k))Y_{a_1}) + |k,k,1\rangle\langle k,k,1| \otimes I_2 \Bigg) (C^\dagger \otimes I_2^{\otimes n} \otimes I_2^{a_1})\Bigg]$$

$$\otimes I_{a_2}$$

$$\text{----------Equation 14}$$

Note that the density matrix *D* is encoded with 2*logNao* + 1 control qubits (the additional control qubit is the a1 qubit) and the coefficients are stored on the target qubit a2 this is encoded is differently than the encoding O(D), where the encoding takes on target qubit a1 and the control qubits are 2 *logN* (a2 qubit is free no operations happen on it). With the above block encoding the Density matrix readouts are obtained as in Equation 15,

$$\langle P,i,0,0,0,0|V_D|P,j,0,0,0,0\rangle = \sum_{k=1}^{N_e/2} C_{ik} C_{kj}^* = D_{ij} \text{ ----- Equation 15}$$

Where $N_e = 2 \sum_{k=1}^{N} \theta(\mu - E_k)$ Further, as a next component to be loaded on the quantum circuit a first Cholesky matrix is encoded on the first set of qubits and the second set of qubits with a first Cholesky tensor shape (*NauxNao, Nao*) using a sequence of Multi-controlled gates to form a Cholesky circuit component. The first Cholesky matrix is created using the 3-center 2-electron integrals, 2-center 2-electron integrals on a CPU, where the control is on the first set of qubits and the data is loaded on the ancilla qubits. On the Quantum Processor or on the Quantum simulator as a next component of the Quantum Circuit the Cholesky matrix is created from the 3-center 2-electron and 2-center 2-electron integrals as represented in Equation 8, on the quantum processing units. That is a (*Nao, Nao, Naux*) electronic repulsion integral tensor which we encode on the same *logNaux + 2 logNao + 2* qubits using the sequence of multi-controlled gates on the Quantum Processors. The controls are on the *logNaux + 2 logNqubits* and the data is loaded on the ancilla qubits. This is qubitized block encoding of the classical rectangular matrix of dimension (*NauxNao, Nao*). The density matrix of dimension (*Nao, Nao*) multiplies the first Cholesky Matrix encoded as (*NauxNao, Nao*) to generate another intermediate matrix of dimension (*NauxNao, Nao*) as given in Equation 16,

$$V_L R_2 V_D \qquad \text{-------------- Equation 16}$$

where VL is the Quantum circuit block that encodes the Cholesky tensor and R3 is the diffusion operator that mixes all the configurations in the combined space of the Auxillary basis *Naux* and the Atomic basis *Nao*. It is to be noted from the first multiplication in the case of the J matrix between the unitary operations that encoded the Cholesky matrix and the Density matrix as given in Equation 17, that was VLO(D), in that case no diffusion was involved.

$$O(D) = I_2^{\otimes m} \otimes \left[ \left( C \otimes I_2^{\otimes n} \otimes I_2^{a_1} \right) \left( \sum_k |k,k\rangle\langle k,k| \otimes \left( \theta(\mu - E_k) I_{a1} + (1 - \theta(\mu \right.\right.\right.$$

$$\left.\left.\left. - E_k) \right) Y_{a1} \right) \left( C^\dagger \otimes I_2^{\otimes n} \otimes I_2^{a_1} \right) \right] \otimes I_{a2}$$

$$\text{---- Equation 17}$$

On the Quantum Processors or on the Quantum simulator, the second Cholesky circuit component is encoded by a second Cholesky matrix with a second Cholesky tensor shape (*Nao, NauxNao*) on the first set of qubits, the second set of qubits using the sequence of Multi-controlled gates to form a second Cholesky circuit component. The control is on the first set of qubits and the data is loaded on ancilla qubits. The first quantum circuit component is composed by multiplying the first Cholesky circuit component with the first Cholesky tensor shape (*NauxNao, Nao*), and the second Cholesky circuit component is composed with the transpose of the second Cholesky tensor shape (*Nao, NauxNao*) and the intermediate matrix to obtain sequences of bitstrings as given in Equation 18 and Equation 19,

$$\langle 0, i, 0, 0, 0 | H^{\otimes m} V_L' R_2 V_L R_2 V_D H^{\otimes m} | 0, j, 0, 1, 0 \rangle = \sum L_{ij}^a L_{kl}^a D_{jk} = K_{ij}$$

$$\text{----- Equation 18}$$

Where,

$$V_L' = \sum_{c=0.r_1=0, r_2=0}^{N_{aux}-1, N_{ao}-1} \left[ |c, r_1, r_2, 0\rangle\langle c, r_1, r_2, 0| \otimes \left( L_{r_1 r_2}^{c'} I + i\sqrt{1 - (L_{r_1 r_2}^{c'})^2 Y} \right) \right.$$

$$\left. + |c, r_1, r_2, 1\rangle\langle c, r, 1| \otimes I_2 \right]$$

$$\text{----- Equation 19}$$

Further, Hybrid matrix is computed by diffusing the first Cholesky circuit component and the second Cholesky circuit component with a diffusion operator Rectangular matrix and the intermediate matrix. On the Quantum Processors or on the Quantum simulator (referring to an example in later embodiments an Isometry free proof for computing Hybrid matrix is illustrated) the second diffusion is between the two Cholesky happens in the combined space of the first set of qubits and the second set of qubits that the enables the multiplication of the rectangular matrix representation of the Cholesky tensor with shape (*Nao, NaoNaux*) and the intermediate matrix (*NauxNao, Nao*). This multiplication is different between the first Cholesky matrix and the second Cholesky matrix that happened only across the *Naux* auxiliary basis direction for the J matrix. In that case the operation on the Quantum circuit was carried out by the diffusion R that acted only the qubits associated with the auxiliary basis. By measuring the second set qubits in the *log Naux + 2log Nao* + 2 qubits to obtain all sequences of bitstrings to read entries of the Direct matrix. The rows and columns are marked from the bitstrings configuration. At this step, the bitstrings measurements are repeated depending on the overlap between the plurality of states to perform amplitude amplification to enhance probability of the sequences of bitstrings.

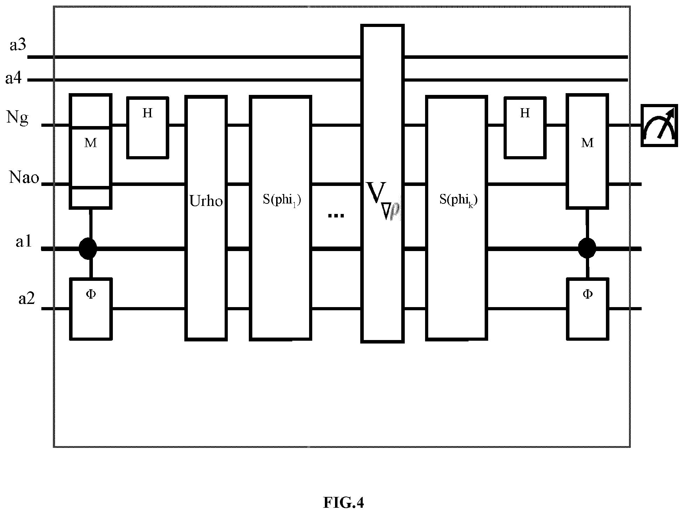

Once the Hybrid matrix is computed, at step 212c (referring now FIG.4) a correlation exchange matrix is determined based on (i) the collocation matrix using a generalized gradient approximation (GGA), and (ii) the Hybrid matrix energy added for DFT computations. Here, the basis functions for different numerical grid points comprise the collocation matrix. Here Ng is the number of real spaces grid points and *Nao* is the number of basis functions. The quantum circuit is constructed using Hadamard and multi-controlled gates to encode the collocation matrix.

Once the correlation exchange is computed, at step 212d a Fock matrix is computed based on (i) the core Hamiltonian, (ii) the direct (J) matrix and the Hybrid (K) matrix constructed from the density matrix and the Cholesky tensor, and (iii) the correlation exchange matrix. The Fock matrix is being composed an additional ancilla qubit is used to add the K matrix contribution as given in Equation 20,

$$U_F = |00\rangle\langle00|\otimes V_h + |01\rangle\langle01\otimes[H^{\otimes m}V_L'RV_LO(\mathbf{D})H^{\otimes m}]$$
$$+|11\rangle\langle11|\otimes[H^{\otimes m}V_L'R_2V_LR_2V_DH^{\otimes m}]$$
$$+|10\rangle\langle10|\otimes H^{\otimes ng}V_\Phi V_Z$$

$$\text{---- Equation 20}$$

Then, at step 212e an updated density matrix is computed by performing qubitized diagonalization on the Fock matrix and a single particle rotation matrix C.

Further referring to the step 214 of the method 200, the one or more quantum processors performs Moller-Plesser Perturbations (MP2) energy corrections on the updated density matrix and the Hybrid (K) matrix using the single particle rotation matrix C of the last convergence when the difference between the density matrix and an updated density matrix converges to a value above the threshold convergence error.

MP2 correction simulator is enabled, firstly by computing the direct matrix (J), the Hybrid (K) matrix and the correlation exchange (Vxc) potentials from the plurality of electron integrals and the density matrix using the Quantum circuits as discussed earlier. Secondly, this enable construction of the Fock matrix, which is diagonalized using a quantum circuit (Qubitized diagonalization) to create the single particle rotation matrix C. Thirdly these rotations matrix C is used along with electron occupancies in the orbitals (2 when both electrons with up and down spin occupied or 0 when not occupied) to create the current step density matrix that is compared with last step density matrix by computing the norm of the difference of density matrices. Further, if the norm is above tolerance then the first two steps (J,K,Vxc construction) and the diagonalization process leading to the next density matrix is continued otherwise the density convergence continues.

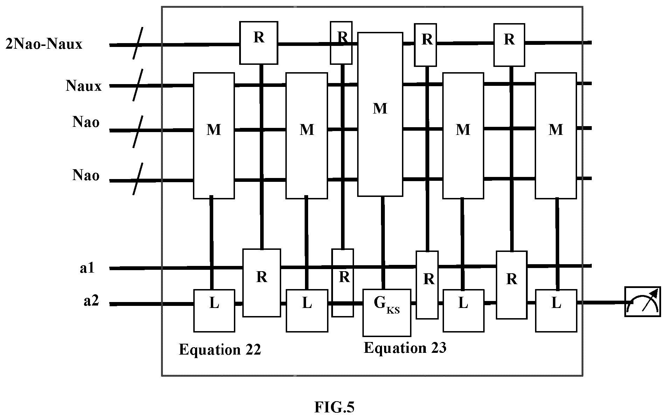

Referring now to FIG.5, Moller-Plesser Perturbations (MP2) energy corrections are performed on the updated density matrix and the Hybrid (K) matrix based on the converges threshold convergence error. MP2 simulator obtains the Hybrid matrix, the first set of qubits, the second set of qubits and two copies of single particle unitary rotation matrix (C) as inputs. The MP2 energy correction is given by Equation 21,

$$E_C^{MP2} = \sum_{ijab} \frac{\langle ia|jb\rangle(2\langle ia|jb\rangle - \langle ja|ib\rangle)}{\epsilon_i + \epsilon_j - \epsilon_a - \epsilon_b} = \sum_{pij,qab} \frac{L_{ia}^p L_{jb}^p \left(2L_{ia}^q L_{jb}^q - L_{ja}^q L_{ib}^q\right)}{\epsilon_i + \epsilon_j - \epsilon_a - \epsilon_b}$$

$$\text{----- Equation 21}$$

The MP2 correction is a wavefunction correction that is added to the DFT Energy. To begin with two copies of the single particle unitary rotation matrix (C) computed from the last Hybrid DFT step is applied on the two sets of *logNao, log Nao* qubits, respectively. The first Cholesky tensor shape (*Naux, Nao, Nao*) is encoded with the first set of qubits and the second set of qubits for reshaping. Starting from the C Given rotations obtained from the Kohn-Sham diagonalization (FC = SCE) of Hybrid DFT post-convergence is completed, the single particle rotation matrix C is obtained and Molecular orbital energy eigenvalues, $\epsilon$1, $\epsilon$*norbs* here *Nao* = 2*norbs.* Then, perform a set of Givens rotation to map the Atomic basis functions $\phi a$ (*x,*

*y, z*) to the Kohn-Sham Molecular Orbital basis and encode the Cholesky in the Kohn Sham Orbital basis as given in Equation 22,

$$
V_L = \sum_{c=0. r_1=0, r_2=0}^{N_{aux}-1, N_{ao}-1} \left[ I^{\otimes p} \otimes C \otimes C \otimes I_2 | c, r_1, r_2, 0 \rangle \langle c, r_1, r_2, 0 | \otimes I^{\otimes p} \otimes C^\dagger \otimes C^\dagger \otimes I_2 \otimes I_2 \right.
$$
$$
+ I^{\otimes p} \otimes C \otimes C \otimes I_2 | c, r_1, r_2, 1 \rangle \langle c, r_1, r_2, 1 | I^{\otimes p} \otimes C \otimes C \otimes I_2 \otimes \left( L^{c'}_{r_1 r_2} I \right.
$$
$$
\left. \left. + i \sqrt{1 - (L^{c'}_{r_1 r_2})^2 Y} \right) \right]
$$

---- Equation 22

The Cholesky tensor is composed by first placing the Unitary circuit for the Cholesky matrix then the Diffusion operator R then another Cholesky circuit. Once the first Cholesky tensor is reshaped, the reshaped first Cholesky tensor is loaded into the quantum circuit. The above step is repeated then one more time the two copies of the single particle rotation matrices C and C acts on the two subsets of *log Nao* qubits each.

Next, the energy denominator comprises the Kohn Sham orbital energies obtained from convergence point. Then the energy denominator comprising of four single particle Fock energies as E1-E2-E3+E4 is encoded on the quantum circuit as given in Equation 23,

$$
G_{KS} = \sum_{rc} \left[ |i, j, k, l, 0 \rangle \langle i, j, k, l, 0 | \right.
$$
$$
\otimes \left( \frac{1}{\epsilon_i - \epsilon_j + \epsilon_k - \epsilon_l} I + \sqrt{1 - \frac{1}{(\epsilon_i - \epsilon_j + \epsilon_k - \epsilon_l{}^2)} Y} \right) \right]
$$
$$
+ |i, j, k, l, 1 \rangle \langle i, j, k, l, 1 | \otimes I_2
$$

--- Equation 23

Further, a pair of updated first Cholesky tensor is obtained to reiterate the loop to compute the Hybrid matrix leading to the MP2 correction being encoded on the Quantum circuit. The other component of the MP2 corrections are obtained by encoding two Cholesky tensors followed by the Block encoding of the denominator and then again followed by the two Cholesky tensors being encoded in the reverse order is given in Equation 24,

$$
\langle 0,0,0,0,0 | H^{\otimes(4 log N_{ao})} V_L' R V_L G_{KS} V_L R V_L' H^{\otimes(4 log N_{ao})} | 0,0,0,0,0 \rangle
$$
$$
= \sum_{pij, qab} L^p_{ia} L^p_{jb} \frac{1}{\epsilon_i + \epsilon_j - \epsilon_a - \epsilon_b} L^q_{ja} L^q_{ib}
$$

------ Equation 24

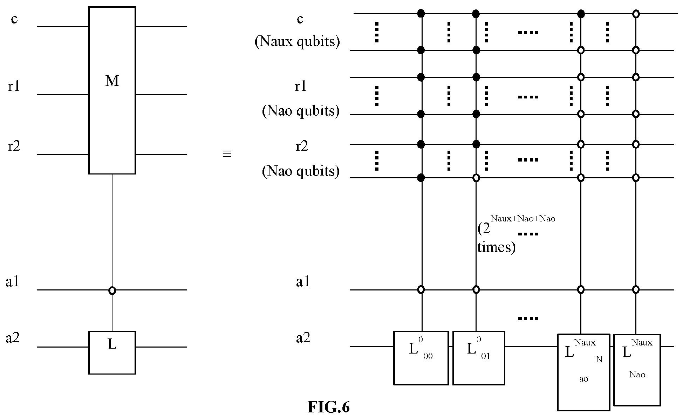

Referring now FIG.6, finally at step 216 of the method 200, the one or more classical hardware processors obtain from the one or more quantum processors, (i) the quantum circuit, (ii) the updated density matrix, and (iii) the MP2 energy corrections, for extracting the plurality of properties associated with the chemical compound.

**Example 1:** For selecting cathode materials for rechargeable batteries, accurate optimized geometry of the cathode molecules in electrolyte environment, and associated ground state energy are calculated from method 200. This will then be used to compute more accurate energy enthalpy differences for the redox reactions. In turn the energy enthalpy differences are used to calculate high open cell voltages(OCV) (equilibrium voltage). A higher OCV leads to a higher cut-off for the recharging voltage. Cathode materials with different co-doped transition metal oxides (like Co, Ni, Mn) are screened using high OCV as the deciding factor. As there are a large number of properties to optimize: Number of battery recharging cycles, Charging percentage, time to recharge, weight of battery material. The number of battery materials number in more than a million, to screen them we need faster quantum chemistry calculation based on Density functional theory.

**Example 2:** In order to attain carbon neutrality in the near future, novel capture technologies have to be discovered. Carbon dioxide adsorption on amine polymers is one such technology. To assess the amount of carbon dioxide that can be adsorbed the BET surface area is computed from classical Molecular dynamics, but it requires calculating the potential energy surface (PES) from electronic calculations. Calculating an accurate PES with post-DFT corrections is computationally expensive which can be overcome by the method 200 disclosed herein.

**Example 3:** For drug conformational search and drug design, the molecular descriptors, conformations, solvation energy is obtained from the method 200 disclosed herein. Then from the conformational energies and the descriptors the subset of drug molecule structure and conformations with desired target properties are prepared via high throughput experimentation.

**Experimental Results:** The Hybrid matrix computation was performed on quantum processor for the inputs received from one or more classical hardware processors using method 200. The classical complexity is measured in terms of space and time complexity. Similarly, the quantum complexity is measured in terms of number of qubits and gate complexity. The results are recorded in Table 1.

**Table 1 - Implemenation of Hybrid DFT**

| Quantity | Classical Complexity | | Quantum Complexity | |
|---|---|---|---|---|
| | Space | Time | No.of Qubits | Gate complexity |
| J(AO) | $O(N_b^4)$ | $O(N_b^4)$ | $4 \log N_b + 2$ | $8 \log N_b$ |
| J(DF) | $O(N_b^2 N_{aux})$ | $O(N_b^2 N_{aux})$ | $2 \log N_b + \log N_{aux}$ | $4 \log N_b + 2 \log N_{aux}$ |
| J(sN) | $O(N_b^2 N_g)$ | $O(N_b^2 N_g)$ | $2 \log N_b + \log N_g$ | $4 \log N_b + 2 \log N_g$ |
| K(AO) | $O(N_b^4)$ | $O(N_b^4)$ | $4 \log N_b + 2$ | $8 \log N_b$ |
| K(DF) | $O(N_b^2 N_{aux})$ | $O(N_b^3 N_{aux})$ | $2 \log N_b + \log N_{aux}$ | $4 \log N_b + 2 \log N_{aux}$ |
| K(sN) | $O(N_{bg}^2 N_{aux})$ | $O(N_b^2 N_g)$ | $\log N_b + \log N_g + 2$ | $2 \log N_b + 2 \log N_g$ |

**Isometry free proof for computing Hybrid matrix** - On the Quantum Processors or on the Quantum simulator is illustrated. The second diffusion is between the two Cholesky happens in the combined space of the first set of qubits and the second set of qubits that the enables multiplication of the rectangular matrix representation of the Cholesky tensor with shape (*Nao, NaoNaux*) and the intermediate matrix (*NauxNao, Nao*).

For example if A and B are general rectangular matrices of dimensions *dim*(A) = (*N, P*) and *dim*(B) = (*P, M*) then there is a unitary operation *U(A, B)* of dimension $2^{n_q} * 2^{n_q}$ that operates on a system of $n_q = p + max(m, n) + 2$ *qubit registers* | ·⟩*p*| ·⟩*max(m,n)*| ·⟩*α*1| ·⟩*α*2 where $n = \lceil log_2 N \rceil, m = \lceil log_2 M \rceil, p = \lceil log_2 P \rceil$ ) and block encodes the matrix multiplication of A and B is represent in Equation A1,

$$\left\langle 0|_p \left\langle i|_{\max(m,n)} \left\langle 0|_{a_1} \left\langle 0|_{a_2} U(A,B) |0\rangle_p |j\right\rangle_{\max(m,n)} |1\rangle_{a_1} |0\rangle_{a_2} \right\rangle \right. = \frac{1}{max(M,N)P} | \frac{\sum_k A_{ik}B_{kj}}{||A|| ||B||}.$$

-------------- Equation A1

Proof is illustrated from Equation (A2-A9), Let us consider the normalized matrices

$$A' = A/(\sqrt{2}||A||),$$

$$B' = B/(\sqrt{2}||B||)$$

For the above normalized matrices, two unitary operators *V(A)* is given in Equation A2 and *V(B)* is given in Equation A3,

$$V_A = \sum_{c=0,r=0}^{2^p,2^{\max(m,n)}} [|c,r,0\rangle\langle c,r,0| \otimes \left(A'_{rc}I + i\sqrt{1 - A'^2_{rc}}Y\right) + |c,r,1\rangle\langle c,r,1| \otimes I_2]$$

$$\text{--- Equation A2}$$

$$V_B = \sum_{c=0,r=0}^{2^p,2^{\max(m,n)}} [|c,r,0\rangle\langle c,r,0| \otimes I_2 + |c,r,1\rangle\langle c,r,1| \otimes \left(B'_{cr}I + i\sqrt{1 - B'^2_{cr}}Y\right)]$$

$$\text{----- Equation A3}$$

The classical data of the B matrix is loaded in the quantum circuit using the state preparation oracle $V_B H^{\otimes p}$ on the initial state $|0\rangle|j\rangle|1\rangle|0\rangle$ as given in Equation A4,

$$|\Phi_B\rangle = V_B H^{\otimes p}|0\rangle|j\rangle|1\rangle|0\rangle = \frac{1}{\sqrt{P}}\sum_c\left[B'_{cj}|c,j,1,0\rangle + \sqrt{1 - B'^2_{cj}}|c,j,1,1\rangle\right]$$

$$\text{----- Equation A4}$$

The classical data of the A matrix is loaded in the quantum circuit using the state preparation oracle $V_A H^{\otimes p}$ as given in Equation A5,

$$|\Phi_A\rangle = V_A H^{\otimes p}|0\rangle|i\rangle|0\rangle|0\rangle = \frac{1}{\sqrt{P}}\sum_c[A'_{ic}|c,i,0,0\rangle + \sqrt{1 - A'^2_{ic}}|c,i,0,1\rangle]$$

$$\text{----- Equation A5}$$

Note that the states $|\Phi_A\rangle$ and $|\Phi_B\rangle$ are orthogonal as given in Equation A6,

$$\langle\Phi_A|\Phi_B\rangle = 0 \qquad \text{----- Equation A6}$$

Further, a diffusion operator R acting on the row registers and the ancillas $a_1$, $a_2$ and R is given in Equation A7,

$$R = I_2^{\otimes p} \otimes \left[H^{\otimes \max(m,n)} \otimes H \otimes I_2\right)(2|0,0,0\rangle\langle 0,0,0|-1)H^{\otimes\max(m,n)} \otimes H \otimes I_2)\right]$$

$$= I_2^{\otimes p} \otimes \left[\sum_{k,l} 2\frac{|k,+,0\rangle\langle l,+,0|}{max(M,N)} - I\right]$$

$$\text{----- Equation A7}$$

Then the overlap between these two states $|\Phi_A\rangle$ and $R|\Phi_B\rangle$ is given by $\langle\Phi_A|R|\Phi_B\rangle$ in Equation A8,

$$\langle\Phi_A|R|\Phi_B\rangle = \langle 0,i,0,0|H_c^{\otimes p}V_A^\dagger R V_B H_c^{\otimes p}|0,j,1,0\rangle = \frac{2\sum_c A'_{ic}B'_{cj}}{max(M,N)P} = \frac{\sum_c A_{ic}B_{cj}}{max(M,N)P||A||||B||}$$

$$\text{----- Equation A8}$$

It is proven with the construction that existence of $U(A, B)$ that can be defined without any isometry as given in Equation A9,

$$U(A,B) = H_c^{\otimes p}V_A^\dagger R V_B H_c^{\otimes p}$$

$$\text{----- Equation A9}$$

The written description describes the subject matter herein to enable any person skilled in the art to make and use the embodiments. The scope of the subject matter embodiments is defined by the claims.

The embodiments of present disclosure herein addresses unresolved problem of quantum computing. The embodiment, thus provides implementation of hybrid density functional theory on quantum processors with Moller-Plesset Perturbation (MP2) corrected for chemical-compound simulation. Moreover, the embodiments herein further provides Hybrid DFT is advantageous over other semi local DFT (LDA, GGA, meta GGA) because of reduction of self-interaction error due to addition of the exact exchange matrix (K-matrix). The proposed Quantum simulation method provides betters band gaps, bond lengths, vibrational frequencies compared to semi-local DFT. MP2 wavefunction correction adds the leading post-DFT correction that betters the prediction of polarization, dipole moment and other physical properties important to assess the applicability of a chemical compound in different use cases.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with the scope of disclosed embodiments being indicated by the following claims.

## Claims

1. A Hybrid-Quantum simulation method (200), performed by a system comprising one or more classical hardware processors and one or more quantum processors, wherein the one or more classical hardware processors are communicably coupled to the one or more quantum processors by respective interfaces, wherein the hybrid-quantum simulation method comprises:

   receiving (202) via the one or more classical hardware processors, a chemical compound to extract a plurality of properties;
   obtaining (204) via the one or more classical hardware processors, a plurality of atomic coordinates of a plurality of molecular orbitals associated with a plurality of molecules comprised in the chemical compound;
   determining (206) via the one or more classical hardware processors, a plurality of inputs from the plurality of atomic coordinates comprising (i) a plurality of electron integrals, (ii) a core Hamiltonian, (iii) a collocation matrix, and (iv) a collocation matrix gradient, wherein the plurality of electron integrals comprises a 3-center 2-electron integrals, 2-center 2-electron integrals, and 2-center 1-electron integrals;
   transmitting (208) the plurality of inputs from the one or more classical hardware processors to the one or more quantum processors;

determining (210) by the one or more quantum processors, a density matrix from the core Hamiltonian;
iteratively performing (212) by the one or more quantum processors, until a criteria is satisfied, wherein the criteria specifies that a difference between the density matrix and an updated density matrix converges to a value below a threshold convergence error, wherein the steps of each iteration to validate the criteria comprises:

(i) computing (212a), a direct, J, matrix from the density matrix on a second set of qubits and a first set of qubits and loading the direct, J, matrix in a quantum circuit, wherein the quantum circuit comprises (i) the first set of qubits, the second set of qubits, and a plurality of ancilla qubits;
(ii) computing (212b) a Hybrid, K, matrix using (i) a first Cholesky tensor of shape for a first Cholesky circuit component, (ii) a second Cholesky tensor of shape for a second Cholesky circuit component, and (iii) the density matrix encoded with the second set of qubits including one control qubit and one target qubit to store coefficients, wherein $Naux$ is a number of auxillary vectors and $Nao$ is a number of atomic orbitals, wherein in the quantum circuit the first Cholesky circuit component and the first Cholesky circuit component are loaded as inputs;
(iii) determining (212c) a correlation exchange matrix based on (i) the collocation matrix using a generalized gradient approximation, GGA, and (ii) the Hybrid, K, matrix energy added for DFT computations;
(iv) computing (212d) a Fock matrix based on (i) the core Hamiltonian, (ii) the direct, J, matrix and the Hybrid, K, matrix constructed from the density matrix , the first Cholesky tensor and the second Cholesky tensor, and (iii) the correlation exchange matrix; and
(v) computing (212e) the updated density matrix by performing qubitized diagonalization on the Fock matrix and a single particle rotation matrix C; and
performing (214) using the one or more quantum processors, Moller-Plesser Perturbations, MP2, energy corrections on the updated density matrix and the Hybrid, K, matrix using the single particle rotation matrix C of the last convergence when the difference between the density matrix and the updated density matrix converges to a value above the threshold convergence error; and
obtaining (216) by the one or more classical hardware processors, from the one or more quantum processors, (i) the quantum circuit, (ii) the updated density matrix, and (iii) the MP2 energy corrections, for extracting the plurality of properties associated with the chemical compound.

2. The Hybrid-Quantum simulation method of claim 1, wherein the Hybrid, K, matrix is computed by performing the steps of:

obtaining the direct, J, matrix and the density matrix;
encoding a first Cholesky matrix on (i) the first set of qubits and (ii) the second set of qubits with a first Cholesky tensor shape using a sequence of Multi-controlled gates to form a Cholesky circuit component, wherein the first Cholesky matrix is created using the 3-center 2-electron integrals, 2-center 2-electron integrals, where the control is on the first set of qubits and the data is loaded on the ancilla qubits;
encoding a second Cholesky matrix with a second Cholesky tensor shape on the first set of qubits, the second set of qubits using the sequence of Multi-controlled gates to form a second Cholesky circuit component, where the control is on the first set of qubits and the data is loaded on ancilla qubits;
composing a first quantum circuit component by multiplying the first Cholesky circuit component with the first Cholesky tensor shape;
composing a second Cholesky circuit component with the transpose of the second Cholesky tensor shape and the intermediate matrix to obtain sequences of bitstrings;
computing the Hybrid matrix by diffusing the first Cholesky circuit component and the second Cholesky circuit component with a diffusion operator Rectangular matrix and the Intermediate matrix;
measuring the second set qubits to obtain all sequences of bitstrings to read entries of the direct matrix; and
performing amplitude amplification to enhance probability of the sequences of bitstrings by removing overlap between a plurality of states.

3. The Hybrid-Quantum simulation method of claim 1, wherein the intermediate matrix is computed from the first Cholesky matrix by multiplying a density matrix tensor shape with a rectangular matrix tensor shape.

4. The Hybrid-Quantum simulation method of claim 2, wherein the MP2 energy corrections are performed on the updated density matrix and the Hybrid matrix using the single particle rotation matrix C of the last convergence by performing the steps of:

obtaining the Hybrid matrix, the first set of qubits, the second set of qubits and two copies of single particle unitary rotation matrix, C;

encoding the first Cholesky tensor shape with the first set of qubits and the second set of qubits to reshape the first Cholesky tensor;

loading the reshaped first Cholesky tensor into the quantum circuit;

repeating the single particle unitary rotation matrix to generate subsets of the first set of qubits;

encoding on the first quantum circuit energy denominator comprising of four single particle Fock energies; and

obtaining a pair of updated first Cholesky tensor to reiterate the loop to compute the Hybrid matrix.

5. A Hybrid-Quantum system (100) for implementation of hybrid density functional theory on Quantum Processors, comprising:

one or more classical hardware processors (108) operatively coupled to the at least one memory (110) storing programmed instructions;

one or more Quantum Processors (126) operatively coupled to at least one Quantum Memory (124) storing programmed instructions;

a quantum-classical interface (106) communicably coupling the one or more classical hardware processors (108) of a computing system with one or more Quantum Processors (122) of a quantum computer;

one or more Input /Output (I/O) interfaces (116);

wherein the one or more Quantum processors (122) and the one or more classical hardware processors (108) are configured by the programmed instructions to:

receive via a one or more classical hardware processor, a chemical compound to extract a plurality of properties;

obtain via the one or more classical hardware processors, a plurality of atomic coordinates of a plurality of molecular orbitals associated with a plurality of molecules comprised in the chemical compound;

determine via the one or more classical hardware processors, a plurality of inputs from the plurality of atomic coordinates comprising (i) a plurality of electron integrals, (ii) a core Hamiltonian, (iii) a collocation matrix, and (iv) a collocation matrix gradient, wherein the plurality of electron integrals comprises a 3-center 2-electron integrals, 2-center 2-electron integrals, and 2-center 1-electron integrals;

transmit the plurality of inputs from the one or more classical hardware processors via the quantum-classical interface to the one or more quantum processors;

determine by the one or more quantum processors, a density matrix from the core Hamiltonian;

iteratively perform by the one or more quantum processors, for a criteria, wherein the criteria specifies that a difference between the density matrix and an updated density matrix converges to a value below a threshold convergence error, wherein the steps of each iteration to validate the criteria comprises:

compute a direct, J, matrix from the density matrix on a second set of qubits and a first set of qubits in a quantum circuit, wherein the quantum circuit comprises (i) the first set of qubits, the second set of qubits, and a plurality of ancilla qubits;

compute a Hybrid, K, matrix using (i) a first Cholesky tensor of shape for a first Cholesky circuit component, (ii) a second Cholesky tensor of shape for a second Cholesky circuit component, and (iii) the density matrix encoded with the second set of qubits including one control qubit and one target qubit to store coefficients, wherein in the quantum circuit the first Cholesky circuit component and the first Cholesky circuit component are loaded as inputs;

determine a correlation exchange matrix based on (i) the collocation matrix using a generalized gradient approximation, GGA, and (ii) the Hybrid matrix energy added for DFT computations;

compute a Fock matrix based on (i) the core Hamiltonian, (ii) the direct, J, matrix and the Hybrid, K, matrix constructed from the density matrix , the first Cholesky tensor and the second Cholesky tensor, and (iii) the correlation exchange matrix; and

compute the updated density matrix by performing qubitized diagonalization on the Fock matrix and a single particle rotation matrix C; and

perform using the one or more quantum processors, Moller-Plesser Perturbations, MP2, energy corrections on the updated density matrix and the Hybrid (K) matrix using the single particle rotation matrix C of the last convergence when the difference between the density matrix and the updated density matrix converges to a value above the threshold convergence error; and

obtain by the one or more classical hardware processors, from the one or more quantum processors, (i) the quantum circuit, (ii) the updated density matrix, and (iii) the MP2 energy corrections, for extracting the plurality of properties associated with the chemical compound.

6. The Hybrid-Quantum system as claimed in claim 5, wherein the Hybrid, K, matrix is computed by performing the steps of:

(i) obtaining the direct, J, matrix and the density matrix;
(ii) encoding a first Cholesky matrix on (i) the first set of qubits and (ii) the second set of qubits with a first Cholesky tensor shape using a sequence of Multi-controlled gates to form a Cholesky circuit component, wherein the first Cholesky matrix is created using the 3-center 2-electron integrals, 2-center 2-electron integrals, where the control is on the first set of qubits and the data is loaded on the ancilla qubits;
(iii) encoding a second Cholesky matrix with a second Cholesky tensor shape on the first set of qubits, the second set of qubits using the sequence of Multi-controlled gates to form a second Cholesky circuit component, where the control is on the first set of qubits and the data is loaded on ancilla qubits;
(iv) composing a first quantum circuit component by multiplying the first Cholesky circuit component with the first Cholesky tensor shape;
(v) composing a second Cholesky circuit component with the transpose of the second Cholesky tensor shape and the intermediate matrix to obtain sequences of bitstrings;
(vi) computing the Hybrid matrix by diffusing the first Cholesky circuit component and the second Cholesky circuit component with a diffusion operator Rectangular matrix and the Intermediate matrix;
(vii) measuring the second set qubits to obtain all sequences of bitstrings to read entries of the direct matrix; and
(viii) performing amplitude amplification to enhance probability of the sequences of bitstrings by removing overlap between a plurality of states.

7. The Hybrid-Quantum system as claimed in claim 5, wherein the intermediate matrix is computed from the first Cholesky matrix by multiplying a density matrix tensor shape with a rectangular matrix tensor shape.

8. The Hybrid-Quantum system as claimed in claim 6, wherein the Moller-Plesser Perturbations, MP2, energy corrections is performed on the updated density matrix and the Hybrid matrix using the single particle rotation matrix C of the last convergence by performing the steps of:

(i) obtaining the Hybrid matrix, the first set of qubits, the second set of qubits and two copies of single particle unitary rotation matrix, C;
(ii) encoding the first Cholesky tensor shape with the first set of qubits and the second set of qubits to reshape the first Cholesky tensor;
(iii) loading the reshaped first Cholesky tensor into the quantum circuit;
(iv) repeating the single particle unitary rotation matrix to generate subsets of the first set of qubits;
(v) encoding on the first quantum circuit energy denominator comprising of four single particle Fock energies; and
(vi) obtaining a pair of updated first Cholesky tensor to reiterate the loop to compute the Hybrid matrix.

9. One or more non-transitory machine-readable information storage mediums comprising one or more instructions which when executed by one or more classical hardware processors and one or more quantum processors communicably coupled by respective interfaces cause:

receiving via the one or more classical hardware processors, a chemical compound to extract a plurality of properties;
obtaining via the one or more classical hardware processors, a plurality of atomic coordinates of a plurality of molecular orbitals associated with a plurality of molecules comprised in the chemical compound;
determining via the one or more classical hardware processors, a plurality of inputs from the plurality of atomic coordinates comprising (i) a plurality of electron integrals, (ii) a core Hamiltonian, (iii) a collocation matrix, and (iv) a collocation matrix gradient, wherein the plurality of electron integrals comprises a 3-center 2-electron integrals, 2-center 2-electron integrals, and 2-center 1-electron integrals;
transmitting the plurality of inputs from the one or more classical hardware processors to the one or more quantum processors;
determining by the one or more quantum processors, a density matrix from the core Hamiltonian;
iteratively performing , by the one or more quantum processors, until a criteria is satisfied, wherein the criteria specifies that a difference between the density matrix and an updated density matrix converges to a value below a threshold convergence error, wherein the steps of each iteration to validate the criteria comprises:

(i) computing , a direct, J, matrix from the density matrix on a second set of qubits and a first set of qubits and loading the direct, J, matrix in a quantum circuit, wherein the quantum circuit comprises (i) the first set of qubits, the second set of qubits, and a plurality of ancilla qubits;

(ii) computing a Hybrid, K, matrix using (i) a first Cholesky tensor of shape for a first Cholesky circuit component, (ii) a second Cholesky tensor of shape for a second Cholesky circuit component, and (iii) the density matrix encoded with the second set of qubits including one control qubit and one target qubit to store coefficients, wherein $Naux$ is a number of auxillary vectors and $Nao$ is a number of atomic orbitals, wherein in the quantum circuit the first Cholesky circuit component and the first Cholesky circuit component are loaded as inputs;

(iii) determining a correlation exchange matrix based on (i) the collocation matrix using a generalized gradient approximation, GGA, and (ii) the Hybrid, K, matrix energy added for DFT computations;

(iv) computing a Fock matrix based on (i) the core Hamiltonian, (ii) the direct ($J$) matrix and the Hybrid, K, matrix constructed from the density matrix, the first Cholesky tensor and the second Cholesky tensor, and (iii) the correlation exchange matrix; and

(v) computing the updated density matrix by performing qubitized diagonalization on the Fock matrix and a single particle rotation matrix C; and performing using the one or more quantum processors, Moller-Plesser Perturbations, MP2, energy corrections on the updated density matrix and the Hybrid, K, matrix using the single particle rotation matrix C of the last convergence when the difference between the density matrix and the updated density matrix converges to a value above the threshold convergence error; and

obtaining by the one or more classical hardware processors, from the one or more quantum processors, (i) the quantum circuit, (ii) the updated density matrix, and (iii) the MP2 energy corrections, for extracting the plurality of properties associated with the chemical compound.

10. The one or more non-transitory machine-readable information storage mediums of claim 9, wherein the Hybrid, K, matrix is computed by performing the steps of:

obtaining the direct, J, matrix and the density matrix;

encoding a first Cholesky matrix on (i) the first set of qubits and (ii) the second set of qubits with a first Cholesky tensor shape using a sequence of Multi-controlled gates to form a Cholesky circuit component, wherein the first Cholesky matrix is created using the 3-center 2-electron integrals, 2-center 2-electron integrals, where the control is on the first set of qubits and the data is loaded on the ancilla qubits,

encoding a second Cholesky matrix with a second Cholesky tensor shape on the first set of qubits, the second set of qubits using the sequence of Multi-controlled gates to form a second Cholesky circuit component, where the control is on the first set of qubits and the data is loaded on ancilla qubits;

composing a first quantum circuit component by multiplying the first Cholesky circuit component with the first Cholesky tensor shape;

composing a second Cholesky circuit component with the transpose of the second Cholesky tensor shape and the intermediate matrix to obtain sequences of bitstrings;

computing the Hybrid matrix by diffusing the first Cholesky circuit component and the second Cholesky circuit component with a diffusion operator Rectangular matrix and the Intermediate matrix;

measuring the second set qubits to obtain all sequences of bitstrings to read entries of the direct matrix; and

performing amplitude amplification to enhance probability of the sequences of bitstrings by removing overlap between a plurality of states.

11. The one or more non-transitory machine-readable information storage mediums of claim 9, wherein the intermediate matrix is computed from the first Cholesky matrix by multiplying a density matrix tensor shape with a rectangular matrix tensor shape.

12. The one or more non-transitory machine-readable information storage mediums of claim 10, wherein the MP2 energy corrections are performed on the updated density matrix and the Hybrid matrix using the single particle rotation matrix C of the last convergence by performing the steps of:

obtaining the Hybrid matrix, the first set of qubits, the second set of qubits and two copies of single particle unitary rotation matrix, C;

encoding the first Cholesky tensor shape with the first set of qubits and the second set of qubits to reshape the first Cholesky tensor;

loading the reshaped first Cholesky tensor into the quantum circuit;

repeating the single particle unitary rotation matrix to generate subsets of the first set of qubits;
encoding on the first quantum circuit energy denominator comprising of four single particle Fock energies; and
obtaining a pair of updated first Cholesky tensor to reiterate the loop to compute the Hybrid matrix.

**Patentansprüche**

1. Hybrid-Quantensimulationsverfahren (200), das von einem System durchgeführt wird, das einen oder mehrere klassische Hardwareprozessoren und einen oder mehrere Quantenprozessoren umfasst, wobei der eine oder die mehreren klassischen Hardwareprozessoren über jeweilige Schnittstellen kommunikativ mit dem einen oder den mehreren Quantenprozessoren gekoppelt sind, wobei das Hybrid-Quantensimulationsverfahren Folgendes umfasst:

Empfangen (202) einer chemischen Verbindung über den einen oder die mehreren klassischen Hardwareprozessoren, um eine Mehrzahl von Eigenschaften zu extrahieren;
Erhalten (204) einer Mehrzahl von Atomkoordinaten einer Mehrzahl von Molekülorbitalen, die einer Mehrzahl von Molekülen zugeordnet sind, die in der chemischen Verbindung enthalten sind, über den einen oder die mehreren klassischen Hardwareprozessoren;
Bestimmen (206) einer Mehrzahl von Eingaben aus der Mehrzahl von Atomkoordinaten über den einen oder die mehreren klassischen Hardwareprozessoren, die (i) eine Mehrzahl von Elektronenintegralen, (ii) einen Kern-Hamilton-Operator, (iii) eine Kollokationsmatrix und (iv) einen Kollokationsmatrixgradienten umfassen, wobei die Mehrzahl von Elektronenintegralen 3-Zentrum-2-Elektronenintegrale, 2-Zentrum-2-Elektronenintegrale und 2-Zentrum-1-Elektronenintegrale umfasst;
Übertragen (208) der Mehrzahl von Eingaben von dem einen oder den mehreren klassischen Hardwareprozessoren an den einen oder die mehreren Quantenprozessoren;
Bestimmen (210) einer Dichtematrix aus dem Kern-Hamilton-Operator durch den einen oder die mehreren Quantenprozessoren;
iteratives Durchführen (212) durch den einen oder die mehreren Quantenprozessoren, bis ein Kriterium erfüllt ist, wobei das Kriterium angibt, dass eine Differenz zwischen der Dichtematrix und einer aktualisierten Dichtematrix auf einen Wert unterhalb eines Schwellenkonvergenzfehlers konvergiert, wobei die Schritte jeder Iteration zum Validieren des Kriteriums Folgendes umfassen:

(i) Berechnen (212a) einer Direkt-$J$,-Matrix aus der Dichtematrix auf einem zweiten Satz von Qubits und einem ersten Satz von Qubits und Laden der Direkt-$J$,-Matrix in eine Quantenschaltung, wobei die Quantenschaltung (i) den ersten Satz von Qubits, den zweiten Satz von Qubits und eine Mehrzahl von Hilfsqubits umfasst;
(ii) Berechnen (212b) einer Hybrid-$K$,-Matrix unter Verwendung (i) eines ersten Cholesky-Tensors der Form für eine erste Cholesky-Schaltungskomponente, (ii) eines zweiten Cholesky-Tensors der Form für eine zweite Cholesky-Schaltungskomponente und (iii) der Dichtematrix, die mit dem zweiten Satz von Qubits codiert ist, einschließlich eines Steuer-Qubits und eines Ziel-Qubits zum Speichern von Koeffizienten, wobei *Naux* eine Anzahl von Hilfsvektoren ist und *Nao* eine Anzahl von Atomorbitalen ist, wobei in der Quantenschaltung die erste Cholesky-Schaltungskomponente und die erste Cholesky-Schaltungskomponente als Eingaben geladen werden;
(iii) Bestimmen (212c) einer Korrelationsaustauschmatrix basierend auf (i) der Kollokationsmatrix unter Verwendung einer generalisierten Gradientenapproximation, GGA, und (ii) der Hybrid-K,-Matrixenergie, die für DFT-Berechnungen hinzugefügt wird;
(iv) Berechnen (212d) einer Fock-Matrix basierend auf (i) dem Kern-Hamilton-Operator, (ii) der Direkt-J,-Matrix und der Hybrid-K,-Matrix, die aus der Dichtematrix, dem ersten Cholesky-Tensor und dem zweiten Cholesky-Tensor konstruiert ist, und (iii) der Korrelationsaustauschmatrix; und
(v) Berechnen (212e) der aktualisierten Dichtematrix durch Durchführen einer qubitisierten Diagonalisierung an der Fock-Matrix und einer Einzelpartikelrotationsmatrix C; und

Durchführen (214) unter Verwendung des einen oder der mehreren Quantenprozessoren von Moller-Plesser-Perturbations-, MP2-, Energiekorrekturen an der aktualisierten Dichtematrix und der Hybrid-K,-Matrix unter Verwendung der Einzelpartikelrotationsmatrix C der letzten Konvergenz, wenn die Differenz zwischen der Dichtematrix und der aktualisierten Dichtematrix auf einen Wert oberhalb des Schwellenkonvergenzfehlers konvergiert; und
Erhalten (216) durch den einen oder die mehreren klassischen Hardwareprozessoren von dem einen oder den mehreren Quantenprozessoren (i) der Quantenschaltung, (ii) der aktualisierten Dichtematrix und (iii) der MP2-Energiekorrekturen zum Extrahieren der Mehrzahl von Eigenschaften, die der chemischen Verbindung zugeordnet sind.

2. Hybrid-Quantensimulationsverfahren nach Anspruch 1, wobei die Hybrid-K-Matrix durch Durchführen der folgenden Schritte berechnet wird:

Erhalten der Direkt-J-Matrix und der Dichtematrix;

Codieren einer ersten Cholesky-Matrix an (i) dem ersten Satz von Qubits und (ii) dem zweiten Satz von Qubits mit einer ersten Cholesky-Tensorform unter Verwendung einer Sequenz von mehrfach gesteuerten Gattern, um eine Cholesky-Schaltungskomponente zu bilden, wobei die erste Cholesky-Matrix unter Verwendung der 3-Zentrum-2-Elektronenintegrale, 2-Zentrum-2-Elektronenintegrale erzeugt wird, wobei die Steuerung auf dem ersten Satz von Qubits ist und die Daten auf die Hilfsqubits geladen werden;

Codieren einer zweiten Cholesky-Matrix mit einer zweiten Cholesky-Tensorform auf dem ersten Satz von Qubits, wobei der zweite Satz von Qubits die Sequenz von mehrfach gesteuerten Gattern verwendet, um eine zweite Cholesky-Schaltungskomponente zu bilden, wobei die Steuerung auf dem ersten Satz von Qubits ist und die Daten auf Hilfsqubits geladen werden;

Zusammensetzen einer ersten Quantenschaltungskomponente durch Multiplizieren der ersten Cholesky-Schaltungskomponente mit der ersten Cholesky-Tensorform;

Zusammensetzen einer zweiten Cholesky-Schaltungskomponente mit der Transponierten der zweiten Cholesky-Tensorform und der Zwischenmatrix, um Sequenzen von Bitfolgen zu erhalten;

Berechnen der Hybridmatrix durch Diffundieren der ersten Cholesky-Schaltungskomponente und der zweiten Cholesky-Schaltungskomponente mit einer Diffusionsoperator-Rechteckmatrix und der Zwischenmatrix;

Messen des zweiten Satzes von Qubits, um alle Sequenzen von Bitfolgen zu erhalten, um Einträge der Direktmatrix zu lesen; und

Durchführen einer Amplitudenverstärkung, um die Wahrscheinlichkeit der Sequenzen von Bitfolgen durch Entfernen einer Überlappung zwischen einer Mehrzahl von Zuständen zu erhöhen.

3. Hybrid-Quantensimulationsverfahren nach Anspruch 1, wobei die Zwischenmatrix aus der ersten Cholesky-Matrix durch Multiplizieren einer Dichtematrix-Tensorform mit einer Rechteckmatrix-Tensorform berechnet wird.

4. Hybrid-Quantensimulationsverfahren nach Anspruch 2, wobei die MP2-Energiekorrekturen an der aktualisierten Dichtematrix und der Hybridmatrix unter Verwendung der Einzelpartikelrotationsmatrix C der letzten Konvergenz durch Durchführen der folgenden Schritte durchgeführt werden:

Erhalten der Hybridmatrix, des ersten Satzes von Qubits, des zweiten Satzes von Qubits und von zwei Kopien der Einzelpartikel-Einheitsrotationsmatrix C;

Codieren der ersten Cholesky-Tensorform mit dem ersten Satz von Qubits und dem zweiten Satz von Qubits, um den ersten Cholesky-Tensor umzuformen;

Laden des umgeformten ersten Cholesky-Tensors in die Quantenschaltung;

Wiederholen der Einzelpartikel-Einheitsrotationsmatrix, um Teilmengen des ersten Satzes von Qubits zu erzeugen;

Codieren an dem ersten Quantenschaltungsenergienenner, der vier Einzelpartikel-Fock-Energien umfasst; und

Erhalten eines Paares von aktualisierten ersten Cholesky-Tensoren, um die Schleife zu wiederholen, um die Hybridmatrix zu berechnen.

5. Hybrid-Quantensystem (100) zur Implementierung von hybrider Dichtefunktionstheorie an Quantenprozessoren, umfassend:

einen oder mehrere klassische Hardwareprozessoren (108), die betriebsfähig mit dem mindestens einen Speicher (110) gekoppelt sind, der programmierte Anweisungen speichert;

einen oder mehrere Quantenprozessoren (126), die betriebsfähig mit mindestens einem Quantenspeicher (124) gekoppelt sind, der programmierte Anweisungen speichert;

eine quantenklassische Schnittstelle (106), die den einen oder die mehreren klassischen Hardwareprozessoren (108) eines Rechensystems kommunikativ mit einem oder mehreren Quantenprozessoren (122) eines Quantencomputers koppelt;

eine oder mehrere Eingabe/Ausgabe(I/O)-Schnittstellen (116);

wobei der eine oder die mehreren Quantenprozessoren (122) und der eine oder die mehreren klassischen Hardwareprozessoren (108) durch die programmierten Anweisungen konfiguriert sind zum:

Empfangen einer chemischen Verbindung über einen oder mehrere klassische Hardwareprozessoren, um eine Mehrzahl von Eigenschaften zu extrahieren;

Erhalten einer Mehrzahl von Atomkoordinaten einer Mehrzahl von Molekülorbitalen, die einer Mehrzahl von Molekülen zugeordnet sind, die in der chemischen Verbindung enthalten sind, über den einen oder die mehreren klassischen Hardwareprozessoren;

Bestimmen einer Mehrzahl von Eingaben aus der Mehrzahl von Atomkoordinaten über den einen oder die mehreren klassischen Hardwareprozessoren, die (i) eine Mehrzahl von Elektronenintegralen, (ii) einen Kern-Hamilton-Operator, (iii) eine Kollokationsmatrix und (iv) einen Kollokationsmatrixgradienten umfassen, wobei die Mehrzahl von Elektronenintegralen 3-Zentrum-2-Elektronenintegrale, 2-Zentrum-2-Elektronenintegrale und 2-Zentrum-1-Elektronenintegrale umfasst;

Übertragen der Mehrzahl von Eingaben von dem einen oder den mehreren klassischen Hardwareprozessoren über die quantenklassische Schnittstelle an den einen oder die mehreren Quantenprozessoren;

Bestimmen einer Dichtematrix aus dem Kern-Hamilton-Operator durch den einen oder die mehreren Quantenprozessoren;

iteratives Durchführen durch den einen oder die mehreren Quantenprozessoren für ein Kriterium, wobei das Kriterium angibt, dass eine Differenz zwischen der Dichtematrix und einer aktualisierten Dichtematrix auf einen Wert unterhalb eines Schwellenkonvergenzfehlers konvergiert, wobei die Schritte jeder Iteration zum Validieren des Kriteriums Folgendes umfassen:

Berechnen einer Direkt-$J$,-Matrix aus der Dichtematrix auf einem zweiten Satz von Qubits und einem ersten Satz von Qubits in einer Quantenschaltung, wobei die Quantenschaltung (i) den ersten Satz von Qubits, den zweiten Satz von Qubits und eine Mehrzahl von Hilfsqubits umfasst;

Berechnen einer Hybrid-K, -Matrix unter Verwendung (i) eines ersten Cholesky-Tensors der Form für eine erste Cholesky-Schaltungskomponente, (ii) eines zweiten Cholesky-Tensors der Form für eine zweite Cholesky-Schaltungskomponente und (iii) der Dichtematrix, die mit dem zweiten Satz von Qubits codiert ist, einschließlich eines Steuer-Qubits und eines Ziel-Qubits zum Speichern von Koeffizienten, wobei in der Quantenschaltung die erste Cholesky-Schaltungskomponente und die erste Cholesky-Schaltungskomponente als Eingaben geladen werden;

Bestimmen einer Korrelationsaustauschmatrix basierend auf (i) der Kollokationsmatrix unter Verwendung einer generalisierten Gradientenapproximation, GGA, und (ii) der Hybrid-Matrixenergie, die für DFT-Berechnungen hinzugefügt wird;

Berechnen einer Fock-Matrix basierend auf (i) dem Kern-Hamilton-Operator, (ii) der Direkt-J,-Matrix und der Hybrid-K,-Matrix, die aus der Dichtematrix, dem ersten Cholesky-Tensor und dem zweiten Cholesky-Tensor konstruiert ist, und (iii) der Korrelationsaustauschmatrix; und

Berechnen der aktualisierten Dichtematrix durch Durchführen einer qubitisierten Diagonalisierung an der Fock-Matrix und einer Einzelpartikelrotationsmatrix C; und

Durchführen unter Verwendung des einen oder der mehreren Quantenprozessoren von Moller-Plesser-Perturbations-, MP2-, Energiekorrekturen an der aktualisierten Dichtematrix und der Hybrid-(K)-Matrix unter Verwendung der Einzelpartikelrotationsmatrix C der letzten Konvergenz, wenn die Differenz zwischen der Dichtematrix und der aktualisierten Dichtematrix auf einen Wert oberhalb des Schwellenkonvergenzfehlers konvergiert; und

Erhalten durch den einen oder die mehreren klassischen Hardwareprozessoren von dem einen oder den mehreren Quantenprozessoren (i) der Quantenschaltung, (ii) der aktualisierten Dichtematrix und (iii) der MP2-Energiekorrekturen zum Extrahieren der Mehrzahl von Eigenschaften, die der chemischen Verbindung zugeordnet sind.

6. Hybrid-Quantensystem nach Anspruch 5, wobei die Hybrid-K-Matrix durch Durchführen der folgenden Schritte berechnet wird:

(i) Erhalten der Direkt-J-Matrix und der Dichtematrix;

(ii) Codieren einer ersten Cholesky-Matrix an (i) dem ersten Satz von Qubits und (ii) dem zweiten Satz von Qubits mit einer ersten Cholesky-Tensorform unter Verwendung einer Sequenz von mehrfach gesteuerten Gattern, um eine Cholesky-Schaltungskomponente zu bilden, wobei die erste Cholesky-Matrix unter Verwendung der 3-Zentrum-2-Elektronenintegrale, 2-Zentrum-2-Elektronenintegrale erzeugt wird, wobei die Steuerung auf dem ersten Satz von Qubits ist und die Daten auf die Hilfsqubits geladen werden;

(iii) Codieren einer zweiten Cholesky-Matrix mit einer zweiten Cholesky-Tensorform auf dem ersten Satz von Qubits, wobei der zweite Satz von Qubits die Sequenz von mehrfach gesteuerten Gattern verwendet, um eine zweite Cholesky-Schaltungskomponente zu bilden, wobei die Steuerung auf dem ersten Satz von Qubits ist und die Daten auf Hilfsqubits geladen werden;

(iv) Zusammensetzen einer ersten Quantenschaltungskomponente durch Multiplizieren der ersten Cholesky-Schaltungskomponente mit der ersten Cholesky-Tensorform;

(v) Zusammensetzen einer zweiten Cholesky-Schaltungskomponente mit der Transponierten der zweiten Cholesky-Tensorform und der Zwischenmatrix, um Sequenzen von Bitfolgen zu erhalten;

(vi) Berechnen der Hybridmatrix durch Diffundieren der ersten Cholesky-Schaltungskomponente und der zweiten Cholesky-Schaltungskomponente mit einer Diffusionsoperator-Rechteckmatrix und der Zwischenmatrix;

(vii) Messen des zweiten Satzes von Qubits, um alle Sequenzen von Bitfolgen zu erhalten, um Einträge der Direktmatrix zu lesen; und

(viii) Durchführen einer Amplitudenverstärkung, um die Wahrscheinlichkeit der Sequenzen von Bitfolgen durch Entfernen einer Überlappung zwischen einer Mehrzahl von Zuständen zu erhöhen.

**7.** Hybrid-Quantensystem nach Anspruch 5, wobei die Zwischenmatrix aus der ersten Cholesky-Matrix durch Multiplizieren einer Dichtematrix-Tensorform mit einer Rechteckmatrix-Tensorform berechnet wird.

**8.** Hybrid-Quantensystem nach Anspruch 6, wobei die Moller-Plesser-Perturbations-, MP2-, Energiekorrekturen an der aktualisierten Dichtematrix und der Hybridmatrix unter Verwendung der Einzelpartikelrotationsmatrix C der letzten Konvergenz durch Durchführen der folgenden Schritte durchgeführt werden:

(i) Erhalten der Hybridmatrix, des ersten Satzes von Qubits, des zweiten Satzes von Qubits und von zwei Kopien der Einzelpartikel-Einheitsrotationsmatrix C;

(ii) Codieren der ersten Cholesky-Tensorform mit dem ersten Satz von Qubits und dem zweiten Satz von Qubits, um den ersten Cholesky-Tensor umzuformen;

(iii) Laden des umgeformten ersten Cholesky-Tensors in die Quantenschaltung;

(iv) Wiederholen der Einzelpartikel-Einheitsrotationsmatrix, um Teilmengen des ersten Satzes von Qubits zu erzeugen;

(v) Codieren an dem ersten Quantenschaltungsenergienenner, der vier Einzelpartikel-Fock-Energien umfasst; und

(vi) Erhalten eines Paares von aktualisierten ersten Cholesky-Tensoren, um die Schleife zu wiederholen, um die Hybridmatrix zu berechnen.

**9.** Ein oder mehrere nichtflüchtige maschinenlesbare Informationsspeichermedien, die eine oder mehrere Anweisungen umfassen, die bei Ausführung durch einen oder mehrere klassische Hardwareprozessoren und einen oder mehrere Quantenprozessoren, die über jeweilige Schnittstellen kommunikativ gekoppelt sind, Folgendes bewirken:

Empfangen einer chemischen Verbindung über den einen oder die mehreren klassischen Hardwareprozessoren, um eine Mehrzahl von Eigenschaften zu extrahieren;

Erhalten einer Mehrzahl von Atomkoordinaten einer Mehrzahl von Molekülorbitalen, die einer Mehrzahl von Molekülen zugeordnet sind, die in der chemischen Verbindung enthalten sind, über den einen oder die mehreren klassischen Hardwareprozessoren;

Bestimmen einer Mehrzahl von Eingaben aus der Mehrzahl von Atomkoordinaten über den einen oder die mehreren klassischen Hardwareprozessoren, die (i) eine Mehrzahl von Elektronenintegralen, (ii) einen Kern-Hamilton-Operator, (iii) eine Kollokationsmatrix und (iv) einen Kollokationsmatrixgradienten umfassen, wobei die Mehrzahl von Elektronenintegralen 3-Zentrum-2-Elektronenintegrale, 2-Zentrum-2-Elektronenintegrale und 2-Zentrum-1-Elektronenintegrale umfasst;

Übertragen der Mehrzahl von Eingaben von dem einen oder den mehreren klassischen Hardwareprozessoren an den einen oder die mehreren Quantenprozessoren;

Bestimmen einer Dichtematrix aus dem Kern-Hamilton-Operator durch den einen oder die mehreren Quantenprozessoren;

iteratives Durchführen durch den einen oder die mehreren Quantenprozessoren, bis ein Kriterium erfüllt ist, wobei das Kriterium angibt, dass eine Differenz zwischen der Dichtematrix und einer aktualisierten Dichtematrix auf einen Wert unterhalb eines Schwellenkonvergenzfehlers konvergiert, wobei die Schritte jeder Iteration zum Validieren des Kriteriums Folgendes umfassen:

(i) Berechnen einer Direkt-J,-Matrix aus der Dichtematrix auf einem zweiten Satz von Qubits und einem ersten Satz von Qubits und Laden der Direkt-$J$,-Matrix in eine Quantenschaltung, wobei die Quantenschaltung (i) den ersten Satz von Qubits, den zweiten Satz von Qubits und eine Mehrzahl von Hilfsqubits umfasst;

(ii) Berechnen einer Hybrid-K,-Matrix unter Verwendung (i) eines ersten Cholesky-Tensors der Form für eine erste Cholesky-Schaltungskomponente, (ii) eines zweiten Cholesky-Tensors der Form für eine zweite Cholesky-Schaltungskomponente und (iii) der Dichtematrix, die mit dem zweiten Satz von Qubits codiert ist, einschließlich eines Steuer-Qubits und eines Ziel-Qubits zum Speichern von Koeffizienten, wobei *Naux* eine Anzahl von Hilfsvektoren ist und *Nao* eine Anzahl von Atomorbitalen ist, wobei in der Quantenschaltung die erste Cholesky-Schaltungskomponente und die erste Cholesky-Schaltungskomponente als Eingaben geladen werden;

(iii) Bestimmen einer Korrelationsaustauschmatrix basierend auf (i) der Kollokationsmatrix unter Verwendung einer generalisierten Gradientenapproximation, GGA, und (ii) der Hybrid-K,-Matrixenergie, die für DFT-Berechnungen hinzugefügt wird;

(iv) Berechnen einer Fock-Matrix basierend auf (i) dem Kern-Hamilton-Operator, (ii) der Direkt-($J$)-Matrix und der Hybrid-K,-Matrix, die aus der Dichtematrix, dem ersten Cholesky-Tensor und dem zweiten Cholesky-Tensor konstruiert ist, und (iii) der Korrelationsaustauschmatrix; und

(v) Berechnen der aktualisierten Dichtematrix durch Durchführen einer qubitisierten Diagonalisierung an der Fock-Matrix und einer Einzelpartikelrotationsmatrix C; und

Durchführen unter Verwendung des einen oder der mehreren Quantenprozessoren von Moller-Plesser-Perturbations-, MP2, Energiekorrekturen an der aktualisierten Dichtematrix und der Hybrid-K,-Matrix unter Verwendung der Einzelpartikelrotationsmatrix C der letzten Konvergenz, wenn die Differenz zwischen der Dichtematrix und der aktualisierten Dichtematrix auf einen Wert oberhalb des Schwellenkonvergenzfehlers konvergiert; und

Erhalten durch den einen oder die mehreren klassischen Hardwareprozessoren von dem einen oder den mehreren Quantenprozessoren (i) der Quantenschaltung, (ii) der aktualisierten Dichtematrix und (iii) der MP2-Energiekorrekturen zum Extrahieren der Mehrzahl von Eigenschaften, die der chemischen Verbindung zugeordnet sind.

10. Ein oder mehrere nichtflüchtige maschinenlesbare Informationsspeichermedien nach Anspruch 9, wobei die Hybrid-K-Matrix durch Durchführen der folgenden Schritte berechnet wird:

Erhalten der Direkt-J-Matrix und der Dichtematrix;

Codieren einer ersten Cholesky-Matrix an (i) dem ersten Satz von Qubits und (ii) dem zweiten Satz von Qubits mit einer ersten Cholesky-Tensorform unter Verwendung einer Sequenz von mehrfach gesteuerten Gattern, um eine Cholesky-Schaltungskomponente zu bilden, wobei die erste Cholesky-Matrix unter Verwendung der 3-Zentrum-2-Elektronenintegrale, 2-Zentrum-2-Elektronenintegrale erzeugt wird, wobei die Steuerung auf dem ersten Satz von Qubits ist und die Daten auf die Hilfsqubits geladen werden;

Codieren einer zweiten Cholesky-Matrix mit einer zweiten Cholesky-Tensorform auf dem ersten Satz von Qubits, wobei der zweite Satz von Qubits die Sequenz von mehrfach gesteuerten Gattern verwendet, um eine zweite Cholesky-Schaltungskomponente zu bilden, wobei die Steuerung auf dem ersten Satz von Qubits ist und die Daten auf Hilfsqubits geladen werden;

Zusammensetzen einer ersten Quantenschaltungskomponente durch Multiplizieren der ersten Cholesky-Schaltungskomponente mit der ersten Cholesky-Tensorform;

Zusammensetzen einer zweiten Cholesky-Schaltungskomponente mit der Transponierten der zweiten Cholesky-Tensorform und der Zwischenmatrix, um Sequenzen von Bitfolgen zu erhalten;

Berechnen der Hybridmatrix durch Diffundieren der ersten Cholesky-Schaltungskomponente und der zweiten Cholesky-Schaltungskomponente mit einer Diffusionsoperator-Rechteckmatrix und der Zwischenmatrix;

Messen des zweiten Satzes von Qubits, um alle Sequenzen von Bitfolgen zu erhalten, um Einträge der Direktmatrix zu lesen; und

Durchführen einer Amplitudenverstärkung, um die Wahrscheinlichkeit der Sequenzen von Bitfolgen durch Entfernen einer Überlappung zwischen einer Mehrzahl von Zuständen zu erhöhen.

11. Ein oder mehrere nichtflüchtige maschinenlesbare Informationsspeichermedien nach Anspruch 9, wobei die Zwischenmatrix aus der ersten Cholesky-Matrix durch Multiplizieren einer Dichtematrix-Tensorform mit einer Rechteckmatrix-Tensorform berechnet wird.

12. Ein oder mehrere nichtflüchtige maschinenlesbare Informationsspeichermedien nach Anspruch 10, wobei die MP2-Energiekorrekturen an der aktualisierten Dichtematrix und der Hybridmatrix unter Verwendung der Einzelpartikelrotationsmatrix C der letzten Konvergenz durch Durchführen der folgenden Schritte durchgeführt werden:

Erhalten der Hybridmatrix, des ersten Satzes von Qubits, des zweiten Satzes von Qubits und von zwei Kopien der Einzelpartikel-Einheitsrotationsmatrix C;

Codieren der ersten Cholesky-Tensorform mit dem ersten Satz von Qubits und dem zweiten Satz von Qubits, um den ersten Cholesky-Tensor umzuformen;

Laden des umgeformten ersten Cholesky-Tensors in die Quantenschaltung;

Wiederholen der Einzelpartikel-Einheitsrotationsmatrix, um Teilmengen des ersten Satzes von Qubits zu erzeugen;

Codieren an dem ersten Quantenschaltungsenergienenner, der vier Einzelpartikel-Fock-Energien umfasst; und

Erhalten eines Paares von aktualisierten ersten Cholesky-Tensoren, um die Schleife zu wiederholen, um die Hybridmatrix zu berechnen.

## Revendications

1. Procédé de simulation quantique hybride (200), réalisé par un système comprenant un ou plusieurs processeurs matériels classiques et un ou plusieurs processeurs quantiques, dans lequel les un ou plusieurs processeurs matériels classiques sont couplés de manière communicante aux un ou plusieurs processeurs quantiques par des interfaces respectives, dans lequel le procédé de simulation quantique hybride comprend :

   la réception (202), via les un ou plusieurs processeurs matériels classiques, d'un composé chimique pour extraire une pluralité de propriétés ;

   l'obtention (204), via les un ou plusieurs processeurs matériels classiques, d'une pluralité de coordonnées atomiques d'une pluralité d'orbitales moléculaires associées à une pluralité de molécules comprises dans le composé chimique ;

   la détermination (206), via les un ou plusieurs processeurs matériels classiques, d'une pluralité d'entrées à partir de la pluralité de coordonnées atomiques comprenant (i) une pluralité d'intégrales d'électrons, (ii) un hamiltonien de coeur, (iii) une matrice de colocation, et (iv) un gradient de matrice de colocation, dans lequel la pluralité d'intégrales d'électrons comprend des intégrales de 2 électrons à 3 centres, des intégrales de 2 électrons à 2 centres, et des intégrales de 1 électron à 2 centres ;

   la transmission (208) de la pluralité d'entrées des un ou plusieurs processeurs matériels classiques aux un ou plusieurs processeurs quantiques ;

   la détermination (210), par les un ou plusieurs processeurs quantiques, d'une matrice de densité à partir du hamiltonien de coeur ;

   la réalisation itérative (212), par les un ou plusieurs processeurs quantiques, jusqu'à ce qu'un critère soit satisfait, dans lequel le critère spécifie qu'une différence entre la matrice de densité et une matrice de densité mise à jour converge vers une valeur inférieure à une erreur de convergence de seuil, dans lequel les étapes de chaque itération pour valider le critère comprennent :

   (i) le calcul (212a) d'une matrice directe, J, à partir de la matrice de densité sur un second ensemble de qubits et un premier ensemble de qubits, et le chargement de la matrice directe, J, dans un circuit quantique, dans lequel le circuit quantique comprend (i) le premier ensemble de qubits, le second ensemble de qubits et une pluralité de qubits auxiliaires ;

   (ii) le calcul (212b) d'une matrice hybride, K, en utilisant (i) un premier tenseur de Cholesky de forme pour un premier composant de circuit de Cholesky, (ii) un second tenseur de Cholesky de forme pour un second composant de circuit de Cholesky, et (iii) la matrice de densité codée avec le second ensemble de qubits incluant un qubit de commande et un qubit cible pour stocker des coefficients, dans lequel *Naux* est un nombre de vecteurs auxiliaires et *Nao* est un nombre d'orbitales atomiques, dans lequel, dans le circuit quantique, le premier composant de circuit de Cholesky et le premier composant de circuit de Cholesky sont chargés en tant qu'entrées ;

   (iii) la détermination (212c) d'une matrice d'échange de corrélation sur la base (i) de la matrice de colocation en utilisant une approximation de gradient généralisée, GGA, et (ii) de l'énergie de matrice hybride, K, ajoutée pour des calculs de DFT ;

   (iv) le calcul (212d) d'une matrice de Fock sur la base (i) du hamiltonien de coeur, (ii) de la matrice directe, J, et de la matrice hybride, K, construites à partir de la matrice de densité, du premier tenseur de Cholesky et du second tenseur de Cholesky, et (iii) de la matrice d'échange de corrélation ; et

   (v) le calcul (212e) de la matrice de densité mise à jour en effectuant une diagonalisation qubitisée sur la matrice de Fock et une matrice de rotation de particule unique C ; et

la réalisation (214), en utilisant les un ou plusieurs processeurs quantiques, de corrections d'énergie de perturbations de Moller-Plesser, MP2, sur la matrice de densité mise à jour et la matrice hybride, K, en utilisant la matrice de rotation de particule unique C de la dernière convergence lorsque la différence entre la matrice de densité et la matrice de densité mise à jour converge vers une valeur supérieure à l'erreur de convergence de seuil ; et

l'obtention (216), par les un ou plusieurs processeurs matériels classiques, à partir des un ou plusieurs processeurs quantiques, (i) du circuit quantique, (ii) de la matrice de densité mise à jour, et (iii) des corrections d'énergie MP2, pour extraire la pluralité de propriétés associées au composé chimique.

2. Procédé de simulation quantique hybride selon la revendication 1, dans lequel la matrice hybride, K, est calculée en réalisant les étapes de :

l'obtention de la matrice directe, J, et de la matrice de densité ;
le codage d'une première matrice de Cholesky sur (i) le premier ensemble de qubits et (ii) le second ensemble de qubits avec une première forme de tenseur de Cholesky en utilisant une séquence de portes multicommandées pour former un composant de circuit de Cholesky, dans lequel la première matrice de Cholesky est créée en utilisant les intégrales de 2 électrons à 3 centres et les intégrales de 2 électrons à 2 centres, où la commande est sur le premier ensemble de qubits et les données sont chargées sur les qubits auxiliaires ;
le codage d'une seconde matrice de Cholesky avec une seconde forme de tenseur de Cholesky sur le premier ensemble de qubits, le second ensemble de qubits utilisant la séquence de portes multicommandées pour former un second composant de circuit de Cholesky, où la commande est sur le premier ensemble de qubits et les données sont chargées sur les qubits auxiliaires ;
la composition d'un premier composant de circuit quantique en multipliant le premier composant de circuit de Cholesky par la première forme de tenseur de Cholesky ;
la composition d'un second composant de circuit de Cholesky avec la transposée de la seconde forme de tenseur de Cholesky et de la matrice intermédiaire pour obtenir des séquences de chaînes de bits ;
le calcul de la matrice hybride en diffusant le premier composant de circuit de Cholesky et le second composant de circuit de Cholesky avec une matrice rectangulaire d'opérateur de diffusion et la matrice intermédiaire ;
la mesure du second ensemble de qubits pour obtenir toutes les séquences de chaînes de bits pour lire des entrées de la matrice directe ; et
la réalisation d'une amplification d'amplitude pour améliorer la probabilité des séquences de chaînes de bits en éliminant le chevauchement entre une pluralité d'états.

3. Procédé de simulation quantique hybride selon la revendication 1, dans lequel la matrice intermédiaire est calculée à partir de la première matrice de Cholesky en multipliant une forme de tenseur de matrice de densité par une forme de tenseur de matrice rectangulaire.

4. Procédé de simulation quantique hybride selon la revendication 2, dans lequel les corrections d'énergie MP2 sont réalisées sur la matrice de densité mise à jour et la matrice hybride en utilisant la matrice de rotation de particule unique C de la dernière convergence en réalisant les étapes visant :

l'obtention de la matrice hybride, du premier ensemble de qubits, du second ensemble de qubits et de deux copies de la matrice de rotation unitaire de particule unique, C ;
le codage de la première forme de tenseur de Cholesky avec le premier ensemble de qubits et le second ensemble de qubits pour remodeler le premier tenseur de Cholesky ;
le chargement du premier tenseur de Cholesky remodelé dans le circuit quantique ;
la répétition de la matrice de rotation unitaire de particule unique pour générer des sous-ensembles du premier ensemble de qubits ;
le codage sur le premier dénominateur d'énergie de circuit quantique comprenant quatre énergies de Fock de particule unique ; et
l'obtention d'une paire de premiers tenseurs de Cholesky mis à jour pour réitérer la boucle pour calculer la matrice hybride.

5. Système quantique hybride (100) pour la mise en œuvre d'une théorie fonctionnelle de densité hybride sur des processeurs quantiques, comprenant :

un ou plusieurs processeurs matériels classiques (108) couplés de manière opérationnelle à l'au moins une mémoire (110) stockant des instructions programmées ;

un ou plusieurs processeurs quantiques (126) couplés de manière opérationnelle à au moins une mémoire quantique (124) stockant des instructions programmées ;

une interface quantique-classique (106) couplant de manière communicante les un ou plusieurs processeurs matériels classiques (108) d'un système informatique avec un ou plusieurs processeurs quantiques (122) d'un ordinateur quantique ;

une ou plusieurs interfaces d'entrée/sortie (E/S) (116) ;

dans lequel les un ou plusieurs processeurs quantiques (122) et les un ou plusieurs processeurs matériels classiques (108) sont configurés par les instructions programmées pour :

recevoir, via un ou plusieurs processeurs matériels classiques, un composé chimique pour extraire une pluralité de propriétés ;

obtenir, via les un ou plusieurs processeurs matériels classiques, une pluralité de coordonnées atomiques d'une pluralité d'orbitales moléculaires associées à une pluralité de molécules comprises dans le composé chimique ;

déterminer, via les un ou plusieurs processeurs matériels classiques, une pluralité d'entrées à partir de la pluralité de coordonnées atomiques comprenant (i) une pluralité d'intégrales d'électrons, (ii) un hamiltonien de coeur, (iii) une matrice de colocation, et (iv) un gradient de matrice de colocation, dans lequel la pluralité d'intégrales d'électrons comprend des intégrales de 2 électrons à 3 centres, des intégrales de 2 électrons à 2 centres, et des intégrales de 1 électron à 2 centres ;

transmettre la pluralité d'entrées des un ou plusieurs processeurs matériels classiques via l'interface quantique-classique aux un ou plusieurs processeurs quantiques ;

déterminer, par les un ou plusieurs processeurs quantiques, une matrice de densité à partir du hamiltonien de coeur ;

réaliser itérativement, par les un ou plusieurs processeurs quantiques, pour un critère, dans lequel le critère spécifie qu'une différence entre la matrice de densité et une matrice de densité mise à jour converge vers une valeur inférieure à une erreur de convergence de seuil, dans lequel les étapes de chaque itération pour valider le critère comprennent :

le calcul d'une matrice directe, J, à partir de la matrice de densité sur un second ensemble de qubits et un premier ensemble de qubits dans un circuit quantique, dans lequel le circuit quantique comprend (i) le premier ensemble de qubits, le second ensemble de qubits et une pluralité de qubits auxiliaires ;

le calcul d'une matrice hybride, K, en utilisant (i) un premier tenseur de Cholesky de forme pour un premier composant de circuit de Cholesky, (ii) un second tenseur de Cholesky de forme pour un second composant de circuit de Cholesky, et (iii) la matrice de densité codée avec le second ensemble de qubits incluant un qubit de commande et un qubit cible pour stocker des coefficients, dans lequel, dans le circuit quantique, le premier composant de circuit de Cholesky et le premier composant de circuit de Cholesky sont chargés en tant qu'entrées ;

la détermination d'une matrice d'échange de corrélation sur la base (i) de la matrice de colocation en utilisant une approximation de gradient généralisée, GGA, et (ii) de l'énergie de matrice hybride ajoutée pour des calculs de DFT ;

le calcul d'une matrice de Fock sur la base (i) du hamiltonien de coeur, (ii) de la matrice directe, J, et de la matrice hybride, K, construites à partir de la matrice de densité, du premier tenseur de Cholesky et du second tenseur de Cholesky, et (iii) de la matrice d'échange de corrélation ; et

le calcul de la matrice de densité mise à jour en effectuant une diagonalisation qubitisée sur la matrice de Fock et une matrice de rotation de particule unique C ; et

la réalisation, en utilisant les un ou plusieurs processeurs quantiques, de corrections d'énergie de perturbations de Moller-Plesser, MP2, sur la matrice de densité mise à jour et la matrice hybride (K) en utilisant la matrice de rotation de particule unique C de la dernière convergence lorsque la différence entre la matrice de densité et la matrice de densité mise à jour converge vers une valeur supérieure à l'erreur de convergence de seuil ; et

l'obtention, par les un ou plusieurs processeurs matériels classiques, à partir des un ou plusieurs processeurs quantiques, (i) du circuit quantique, (ii) de la matrice de densité mise à jour, et (iii) des corrections d'énergie MP2, pour extraire la pluralité de propriétés associées au composé chimique.

6. Système quantique hybride selon la revendication 5, dans lequel la matrice hybride, K, est calculée en réalisant les étapes de :

(i) l'obtention de la matrice directe, J, et de la matrice de densité ;

(ii) le codage d'une première matrice de Cholesky sur (i) le premier ensemble de qubits et (ii) le second ensemble de qubits avec une première forme de tenseur de Cholesky en utilisant une séquence de portes multicommandées pour former un composant de circuit de Cholesky, dans lequel la première matrice de Cholesky est créée en utilisant les intégrales de 2 électrons à 3 centres et les intégrales de 2 électrons à 2 centres, où la commande est sur le premier ensemble de qubits et les données sont chargées sur les qubits auxiliaires ;

(iii) le codage d'une seconde matrice de Cholesky avec une seconde forme de tenseur de Cholesky sur le premier ensemble de qubits, le second ensemble de qubits utilisant la séquence de portes multicommandées pour former un second composant de circuit de Cholesky, où la commande est sur le premier ensemble de qubits et les données sont chargées sur les qubits auxiliaires ;

(iv) la composition d'un premier composant de circuit quantique en multipliant le premier composant de circuit de Cholesky par la première forme de tenseur de Cholesky ;

(v) la composition d'un second composant de circuit de Cholesky avec la transposée de la seconde forme de tenseur de Cholesky et de la matrice intermédiaire pour obtenir des séquences de chaînes de bits ;

(vi) le calcul de la matrice hybride en diffusant le premier composant de circuit de Cholesky et le second composant de circuit de Cholesky avec une matrice rectangulaire d'opérateur de diffusion et la matrice intermédiaire ;

(vii) la mesure du second ensemble de qubits pour obtenir toutes les séquences de chaînes de bits pour lire des entrées de la matrice directe ; et

(viii) la réalisation d'une amplification d'amplitude pour améliorer la probabilité des séquences de chaînes de bits en éliminant le chevauchement entre une pluralité d'états.

7. Système quantique hybride selon la revendication 5, dans lequel la matrice intermédiaire est calculée à partir de la première matrice de Cholesky en multipliant une forme de tenseur de matrice de densité par une forme de tenseur de matrice rectangulaire.

8. Système quantique hybride selon la revendication 6, dans lequel les corrections d'énergie de perturbations de Moller-Plesser, MP2, sont réalisées sur la matrice de densité mise à jour et la matrice hybride en utilisant la matrice de rotation de particule unique C de la dernière convergence en réalisant les étapes visant :

(i) l'obtention de la matrice hybride, du premier ensemble de qubits, du second ensemble de qubits et de deux copies de la matrice de rotation unitaire de particule unique, C ;

(ii) le codage de la première forme de tenseur de Cholesky avec le premier ensemble de qubits et le second ensemble de qubits pour remodeler le premier tenseur de Cholesky ;

(iii) le chargement du premier tenseur de Cholesky remodelé dans le circuit quantique ;

(iv) la répétition de la matrice de rotation unitaire de particule unique pour générer des sous-ensembles du premier ensemble de qubits ;

(v) le codage sur le premier dénominateur d'énergie de circuit quantique comprenant quatre énergies de Fock de particule unique ; et

(vi) l'obtention d'une paire de premiers tenseurs de Cholesky mis à jour pour réitérer la boucle pour calculer la matrice hybride.

9. Un ou plusieurs supports de stockage d'informations lisibles par machine non transitoires comprenant une ou plusieurs instructions qui, lorsqu'elles sont exécutées par un ou plusieurs processeurs matériels classiques et un ou plusieurs processeurs quantiques couplés de manière communicante par des interfaces respectives, amènent :

la réception, via les un ou plusieurs processeurs matériels classiques, d'un composé chimique pour extraire une pluralité de propriétés ;

l'obtention, via les un ou plusieurs processeurs matériels classiques, d'une pluralité de coordonnées atomiques d'une pluralité d'orbitales moléculaires associées à une pluralité de molécules comprises dans le composé chimique ;

la détermination, via les un ou plusieurs processeurs matériels classiques, d'une pluralité d'entrées à partir de la pluralité de coordonnées atomiques comprenant (i) une pluralité d'intégrales d'électrons, (ii) un hamiltonien de coeur, (iii) une matrice de colocation, et (iv) un gradient de matrice de colocation, dans lequel la pluralité d'intégrales d'électrons comprend des intégrales de 2 électrons à 3 centres, des intégrales de 2 électrons à 2 centres, et des intégrales de 1 électron à 2 centres ;

la transmission de la pluralité d'entrées des un ou plusieurs processeurs matériels classiques aux un ou plusieurs processeurs quantiques ;

la détermination, par les un ou plusieurs processeurs quantiques, d'une matrice de densité à partir du hamiltonien de coeur ;

la réalisation itérative, par les un ou plusieurs processeurs quantiques, jusqu'à ce qu'un critère soit satisfait, dans lequel le critère spécifie qu'une différence entre la matrice de densité et une matrice de densité mise à jour converge vers une valeur inférieure à une erreur de convergence de seuil, dans lequel les étapes de chaque itération pour valider le critère comprennent :

(i) le calcul d'une matrice directe, J, à partir de la matrice de densité sur un second ensemble de qubits et un premier ensemble de qubits, et le chargement de la matrice directe, J, dans un circuit quantique, dans lequel le circuit quantique comprend (i) le premier ensemble de qubits, le second ensemble de qubits et une pluralité de qubits auxiliaires ;

(ii) le calcul d'une matrice hybride, K, en utilisant (i) un premier tenseur de Cholesky de forme pour un premier composant de circuit de Cholesky, (ii) un second tenseur de Cholesky de forme pour un second composant de circuit de Cholesky, et (iii) la matrice de densité codée avec le second ensemble de qubits incluant un qubit de commande et un qubit cible pour stocker des coefficients, dans lequel *Naux* est un nombre de vecteurs auxiliaires et *Nao* est un nombre d'orbitales atomiques, dans lequel, dans le circuit quantique, le premier composant de circuit de Cholesky et le premier composant de circuit de Cholesky sont chargés en tant qu'entrées ;

(iii) la détermination d'une matrice d'échange de corrélation sur la base (i) de la matrice de colocation en utilisant une approximation de gradient généralisée, GGA, et (ii) de l'énergie de matrice hybride, K, ajoutée pour des calculs de DFT ;

(iv) le calcul d'une matrice de Fock sur la base (i) du hamiltonien de coeur, (ii) de la matrice directe, J, et de la matrice hybride, K, construites à partir de la matrice de densité, du premier tenseur de Cholesky et du second tenseur de Cholesky, et (iii) de la matrice d'échange de corrélation ; et

(v) le calcul de la matrice de densité mise à jour en effectuant une diagonalisation qubitisée sur la matrice de Fock et une matrice de rotation de particule unique C ; et

la réalisation, en utilisant les un ou plusieurs processeurs quantiques, de corrections d'énergie de perturbations de Moller-Plesser, MP2, sur la matrice de densité mise à jour et la matrice hybride, K, en utilisant la matrice de rotation de particule unique C de la dernière convergence lorsque la différence entre la matrice de densité et la matrice de densité mise à jour converge vers une valeur supérieure à l'erreur de convergence de seuil ; et

l'obtention, par les un ou plusieurs processeurs matériels classiques, à partir des un ou plusieurs processeurs quantiques, (i) du circuit quantique, (ii) de la matrice de densité mise à jour, et (iii) des corrections d'énergie MP2, pour extraire la pluralité de propriétés associées au composé chimique.

10. Un ou plusieurs supports de stockage d'informations lisibles par machine non transitoires selon la revendication 9, dans lesquels la matrice hybride, K, est calculée en réalisant les étapes de :

l'obtention de la matrice directe, J, et de la matrice de densité ;

le codage d'une première matrice de Cholesky sur (i) le premier ensemble de qubits et (ii) le second ensemble de qubits avec une première forme de tenseur de Cholesky en utilisant une séquence de portes multicommandées pour former un composant de circuit de Cholesky, dans lequel la première matrice de Cholesky est créée en utilisant les intégrales de 2 électrons à 3 centres et les intégrales de 2 électrons à 2 centres, où la commande est sur le premier ensemble de qubits et les données sont chargées sur les qubits auxiliaires ;

le codage d'une seconde matrice de Cholesky avec une seconde forme de tenseur de Cholesky sur le premier ensemble de qubits, le second ensemble de qubits utilisant la séquence de portes multicommandées pour former un second composant de circuit de Cholesky, où la commande est sur le premier ensemble de qubits et les données sont chargées sur les qubits auxiliaires ;

la composition d'un premier composant de circuit quantique en multipliant le premier composant de circuit de Cholesky par la première forme de tenseur de Cholesky ;

la composition d'un second composant de circuit de Cholesky avec la transposée de la seconde forme de tenseur de Cholesky et de la matrice intermédiaire pour obtenir des séquences de chaînes de bits ;

le calcul de la matrice hybride en diffusant le premier composant de circuit de Cholesky et le second composant de circuit de Cholesky avec une matrice rectangulaire d'opérateur de diffusion et la matrice intermédiaire ;

la mesure du second ensemble de qubits pour obtenir toutes les séquences de chaînes de bits pour lire des entrées de la matrice directe ; et

la réalisation d'une amplification d'amplitude pour améliorer la probabilité des séquences de chaînes de bits en éliminant le chevauchement entre une pluralité d'états.

11. Un ou plusieurs supports de stockage d'informations lisibles par machine non transitoires selon la revendication 9, dans lesquels la matrice intermédiaire est calculée à partir de la première matrice de Cholesky en multipliant une forme de tenseur de matrice de densité par une forme de tenseur de matrice rectangulaire.

12. Un ou plusieurs supports de stockage d'informations lisibles par machine non transitoires selon la revendication 10, dans lesquels les corrections d'énergie MP2 sont réalisées sur la matrice de densité mise à jour et la matrice hybride en utilisant la matrice de rotation de particule unique C de la dernière convergence en réalisant les étapes visant :

l'obtention de la matrice hybride, du premier ensemble de qubits, du second ensemble de qubits et de deux copies de la matrice de rotation unitaire de particule unique, C ;
le codage de la première forme de tenseur de Cholesky avec le premier ensemble de qubits et le second ensemble de qubits pour remodeler le premier tenseur de Cholesky ;
le chargement du premier tenseur de Cholesky remodelé dans le circuit quantique ;
la répétition de la matrice de rotation unitaire de particule unique pour générer des sous-ensembles du premier ensemble de qubits ;
le codage sur le premier dénominateur d'énergie de circuit quantique comprenant quatre énergies de Fock de particule unique ; et
l'obtention d'une paire de premiers tenseurs de Cholesky mis à jour pour réitérer la boucle pour calculer la matrice hybride.

FIG. 1

200

202
receive via a one or more classical hardware processor, a chemical compound to extract a plurality of properties

204
obtain via the one or more classical hardware processors, a plurality of atomic coordinates of a plurality of molecular orbitals associated with a plurality of molecules comprised in the chemical compound

206
Determine a plurality of inputs from the plurality of atomic coordinates comprising (i) a plurality of electron integrals, (i) a core Hamiltonian, (ii) a collocation matrix, and (iii) a collocation matrix gradient

208
Transmit the plurality of inputs from the once or more classical processors of a classical computer to a one or more quantum processor of a quantum computer

210
Determine a density matrix from the core Hamiltonian

A

FIG. 2A

Ⓐ

Iteratively updating for a criteria where a difference between the density matrix and an updated density matrix converges to a value below a threshold convergence error, wherein the steps of iteration comprising: — 212

Computing a direct matrix from the density matrix on a second set of qubits and a first set of qubits in a quantum circuit — 212a

Computing a Hybrid matrix using a first Cholesky circuit component and a second Cholesky circuit component — 212b

Determining a correlation exchange matrix based on the collocation matrix and the Hybrid matrix energy — 212c

Computing a Fock matrix based on the core Hamiltonian, the direct matrix, the Hybrid matrix and the correlation exchange matrix — 212d

Computing an updated density matrix by performing qubitized diagnolization — 212e

Ⓑ

FIG. 2B

B

performing using the one or more quantum processors, Moller-Plesser Perturbations (MP2) energy corrections on the updated density matrix and the Hybrid ($K$) matrix using the single particle rotation matrix $C$ of the last convergence when the difference between the density matrix and an updated density matrix converges to a value above the threshold convergence error

214

obtain from the one or more quantum processors, (i) the quantum circuit, (ii) the updated density matrix, and (iii) the MP2 energy corrections, to be performed by the one or more classical hardware processors for extracting the plurality of properties associated with the chemical compound

216

**FIG.2C**

FIG.3

**FIG.4**

**FIG.5**

**FIG.6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220012382 A1

- IN 202321061415

**Non-patent literature cited in the description**

- **ROSSMANNEK MAX et al.** *Quantum HF/DFT-Embedding Algorithms for Electronic Structure Calculations: Scaling up to Complex Molecular Systems*
- **KO TAEHEE et al.** *Implementation of the Density-functional Theory on Quantum Computers with Linear Scaling with respect to the Number of Atoms*
- **ROBERT SCHADE et al.** *Parallel Quantum Chemistry on Noisy Intermediate-Scale Quantum Computers*

- **ROSSMANNEK MAX et al.** *Quantum Embedding Method for the Simulation of Strongly Correlated Systems on Quantum Computers*
- **SAMBIT DAS et al.** *DFT-FE 1.0: A massively parallel hybrid CPU-GPU density functional theory code using finite-element discretization*, 2020, vol. 246, 106853
- **RYAN PEDERSON et al.** *Large scale quantum chemistry with tensor processing units*